# EUROPEAN PATENT APPLICATION

(11) **EP 4 808 121 A1**
(43) Date of publication of application: **16.09.2026**
(21) Application number: 24914563.2
(22) Date of filing: 03.01.2024
(51) Int. Cl.: H04N 19/147

(54) **POINT CLOUD CODING METHOD, POINT CLOUD DECODING METHOD, CODERS, DECODERS, CODE STREAM AND STORAGE MEDIUM**

(71) Applicant: GUANGDONG OPPO MOBILE TELECOMMUNICATIONS CORP., LTD., Dongguan, Guangdong 523860 (CN)
(72) Inventor: SUN, Zexing, Dongguan, Guangdong 523860 (CN)
(74) Representative: RGTH
(86) International application number: PCT/CN2024/070362
(87) International publication number: WO 2025/145330

(57) **Abstract**

Provided in the embodiments of the present application are a point cloud coding method, a point cloud decoding method, coders, decoders, a code stream and a storage medium. The point cloud decoding method comprises: determining an inter-frame prediction mode of attribute information of a current frame, the inter-frame prediction mode of the attribute information of the current frame comprising a first prediction mode and a second prediction mode, a reference frame of the first prediction mode being a first reference frame of the current frame which is not subjected to motion compensation, and a reference frame of the second prediction mode being a second reference frame of the current frame subjected to motion compensation; if the inter-frame prediction mode is the second prediction mode, performing inter-frame prediction on the attribute information on the basis of the second reference frame, so as to determine a predicted value of the attribute information; and determining a reconstructed value of the attribute information on the basis of the predicted value of the attribute information.

## Description

### TECHNICAL FIELD

This application relates to the field of point cloud encoding and decoding technologies, and in particular, to a point cloud encoding method, a point cloud decoding method, an encoder, a decoder, a bit stream, and a storage medium.

### BACKGROUND

In an encoding and decoding framework of geometry-based point cloud compression (geometry-based point cloud compression, G-PCC), geometric information and attribute information of a point cloud are encoded and decoded separately. How to improve encoding and decoding efficiency of attribute information is a problem to be solved.

### SUMMARY

Embodiments of this application provide a point cloud encoding method, a point cloud decoding method, an encoder, a decoder, a bitstream, and a storage medium. Various aspects of this application are described below.

According to a first aspect, there is provided a point cloud decoding method. The point cloud decoding method is applied to a decoder, and includes: determining an inter prediction mode for attribute information of a current frame, where the inter prediction mode for the attribute information of the current frame includes a first prediction mode and a second prediction mode, a reference frame for the first prediction mode is a first reference frame of the current frame that is not subjected to motion compensation, and a reference frame for the second prediction mode is a second reference frame of the current frame that is subjected to motion compensation; in a case that the inter prediction mode is the second prediction mode, performing inter prediction on the attribute information based on the second reference frame, to determine a predicted value of the attribute information; and determining a reconstructed value of the attribute information based on the predicted value of the attribute information.

According to a second aspect, there is provided a point cloud encoding method. The point cloud encoding method is applied to an encoder, and includes: performing inter prediction on attribute information of a current frame based on a first prediction mode, to determine a first rate distortion cost, where a reference frame for the first prediction mode is a first reference frame of the current frame that is not subjected to motion compensation; performing inter prediction on the attribute information based on a second prediction mode, to determine a second rate distortion cost, where a reference frame for the second prediction mode is a second reference frame of the current frame that is subjected to motion compensation; and determining a target prediction mode from the first prediction mode and the second prediction mode based on the first rate distortion cost and the second rate distortion cost.

According to a third aspect, there is provided a decoder. The decoder includes: a first determining unit, configured to determine an inter prediction mode for attribute information of a current frame, where the inter prediction mode for the attribute information of the current frame includes a first prediction mode and a second prediction mode, a reference frame for the first prediction mode is a first reference frame of the current frame that is not subjected to motion compensation, and a reference frame for the second prediction mode is a second reference frame of the current frame that is subjected to motion compensation; a second determining unit, configured to: in a case that the inter prediction mode is the second prediction mode, perform inter prediction on the attribute information based on the second reference frame, to determine a predicted value of the attribute information; and a third determining unit, configured to determine a reconstructed value of the attribute information based on the predicted value of the attribute information.

According to a fourth aspect, there is provided a decoder. The decoder includes a processor and a memory. The memory is configured to store a computer program, and the processor is configured to execute the method according to the first aspect when running the computer program.

According to a fifth aspect, there is provided an encoder. The encoder includes: a first determining unit, configured to perform inter prediction on attribute information of a current frame based on a first prediction mode, to determine a first rate distortion cost, where a reference frame for the first prediction mode is a first reference frame of the current frame that is not subjected to motion compensation; a second determining unit, configured to perform inter prediction on the attribute information based on a second prediction mode, to determine a second rate distortion cost, where a reference frame for the second prediction mode is a second reference frame of the current frame that is subjected to motion compensation; and a third determining unit, configured to determine a target prediction mode from the first prediction mode and the second prediction mode based on the first rate distortion cost and the second rate distortion cost.

According to a sixth aspect, there is provided an encoder. The encoder includes a processor and a memory. The memory is configured to store a computer program, and the processor is configured to execute the method according to the second aspect when running the computer program.

According to a seventh aspect, there is provided a computer-readable storage medium, where the computer-readable storage medium stores a computer program, and the computer program, when executed, causes the method according to the first aspect or the second aspect to be implemented.

According to an eighth aspect, there is provided a non-volatile computer-readable storage medium storing a bitstream, where the bitstream is generated by using an encoding method of an encoder, or the bitstream is decoded by using a decoding method of a decoder, where the decoding method is the method according to the first aspect, and the encoding method is the method according to the second aspect.

According to a ninth aspect, there is provided a bitstream. The bitstream includes a bitstream generated according to the method in the second aspect.

In embodiments of this application, an inter prediction scheme based on motion compensation is introduced for inter prediction of attribute information. On this basis, in embodiments of this application, an appropriate inter prediction scheme is selected based on a rate distortion cost obtained using an inter prediction scheme without motion compensation and a rate distortion cost obtained using an inter prediction scheme with motion compensation, which is conducive to improving encoding and decoding efficiency of attribute information of a point cloud.

### BRIEF DESCRIPTION OF DRAWINGS

FIG. 1A is a schematic diagram of a three-dimensional point cloud image.
FIG. 1B is a locally enlarged view of a three-dimensional point cloud image.
FIG. 2A is a schematic diagram of a point cloud image viewed from six angles.
FIG. 2B is a schematic diagram of a data storage format corresponding to a point cloud image.
FIG. 3 is a schematic diagram of a network architecture of point cloud encoding and decoding.
FIG. 4A is a schematic diagram of a framework of a G-PCC encoder.
FIG. 4B is a schematic diagram of a framework of a G-PCC decoder.
FIG. 5A is a schematic diagram of low planar positions in a Z-axis direction.
FIG. 5B is a schematic diagram of high planar positions in a Z-axis direction.
FIG. 6 is a schematic diagram of a node encoding sequence.
FIG. 7A is a schematic diagram of a piece of planar mode information.
FIG. 7B is a schematic diagram of another piece of planar mode information.
FIG. 8 is a schematic diagram of sibling nodes of a current node.
FIG. 9A is a schematic diagram of three vertices included in a block.
FIG. 9B is a schematic diagram of a triangle soup fitted by using three vertices.
FIG. 9C is a schematic diagram of up-sampling performed on a triangle soup.
FIG. 10 is a schematic diagram of distance-based level of detail (level of detail, LOD) construction.
FIG. 11 is a schematic diagram of a generation process of a distance-based LOD point cloud.
FIG. 12 is a schematic diagram of an encoding process of attribute information of an LOD point cloud.
FIG. 13 is a schematic diagram of a structure of refinement layers obtained by LOD partitioning.
FIG. 14 is a schematic diagram of inter-layer nearest neighbor search based on LOD.
FIG. 15A is a schematic diagram of a spatial relationship between a block and a parent block.
FIG. 15B is a schematic diagram of neighboring blocks each sharing a face, neighboring blocks each sharing an edge, and neighboring blocks each sharing a vertex with a current parent block.
FIG. 16 is a schematic diagram of a manner of performing nearest neighbor search for a current point.
FIG. 17 is a schematic diagram of a manner of performing intra-layer nearest neighbor search for attribute information.
FIG. 18 is a schematic diagram of a manner of performing a fast search within an LOD layer.
FIG. 19 is a schematic diagram of a neighborhood search prediction structure based on Morton codes.
FIG. 20 is a schematic diagram of an encoding process of lifting transform.
FIG. 21 is an example diagram of a transform process of region adaptive hierarchal transform (region adaptive hierarchal transform, RAHT).
FIG. 22 is another example diagram of an RAHT transform process.
FIG. 23 is a schematic diagram of RAHT transform and inverse RAHT transform.
FIG. 24 is a schematic diagram of a coding block structure of attribute information.
FIG. 25 is a schematic diagram of an overall process of RAHT intra prediction transform encoding of attribute information.
FIG. 26 is an example diagram of a linear fitting manner for neighboring attribute information of a current block.
FIG. 27 is a schematic diagram of RAHT intra prediction transform encoding of attribute information.
FIG. 28 is a schematic diagram of an inter prediction process of attribute information.
FIG. 29 is a schematic diagram of correspondences between slices (slice) in a current frame and prediction units in a reference frame.
FIG. 30 is a schematic flowchart of a decoding method according to an embodiment of this application.
FIG. 31 is a schematic flowchart of an encoding method according to an embodiment of this application.
FIG. 32 is a schematic structural diagram of a decoder according to an embodiment of this application.
FIG. 33 is a schematic structural diagram of a decoder according to another embodiment of this application.
FIG. 34 is a schematic structural diagram of an encoder according to an embodiment of this application.
FIG. 35 is a schematic structural diagram of an encoder according to another embodiment of this application.

### DESCRIPTION OF EMBODIMENTS

To understand features and technical content of embodiments of this application in more detail, the following describes implementation of embodiments of this application in detail with reference to the accompanying drawings. The accompanying drawings are merely used for description, and are not intended to limit embodiments of this application.

Unless otherwise defined, all technical and scientific terms used in this specification have the same meaning as commonly understood by those skilled in the technical field of this application. The terms used herein are merely for the purpose of describing embodiments of this application, but are not intended to limit this application.

In the following descriptions, the term "some embodiments" describes a subset of all possible embodiments, but it may be understood that "some embodiments" may be the same subset or different subsets of all possible embodiments and may be combined without a conflict.

It should also be noted that the term "first/second/third" used in embodiments of this application is merely used to distinguish between similar objects and does not represent a specific order of objects. It may be understood that "first/second/third" may be interchanged if allowed, so that embodiments of this application described herein may be implemented in a sequence other than the sequence illustrated or described herein.

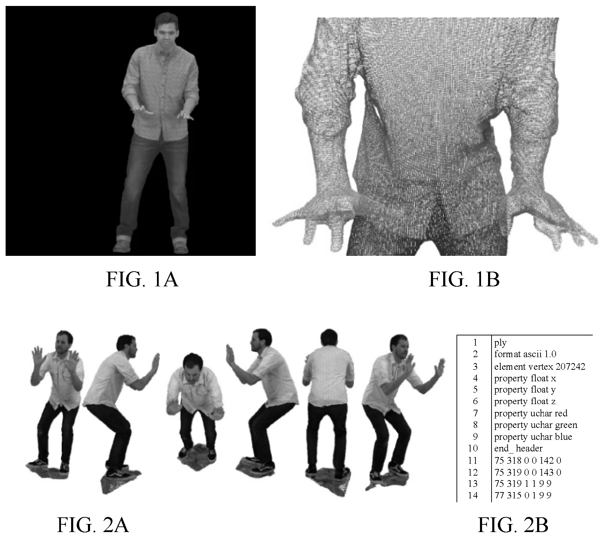

A point cloud is a set of discrete points in space that are irregularly distributed and represent a spatial structure and surface attributes of a three-dimensional object or scene. These points include geometric information for representing spatial positions and attribute information for representing appearance and texture of the point cloud. FIG. 1A shows a three-dimensional point cloud image, and FIG. 1B is a locally enlarged view of the three-dimensional point cloud image. It can be seen that a surface of the point cloud includes densely distributed points.

Samples of a two-dimensional image each express some information and follow a distribution rule. Therefore, position information of the two-dimensional image does not need to be additionally recorded. However, points in a point cloud in a three-dimensional space are randomly and irregularly distributed. Therefore, a position of each point in the space needs to be recorded, to fully express the point cloud. Similar to that in the two-dimensional image, in a collection process, each position has corresponding attribute information, which is usually an RGB color value. The color value reflects a color of an object. For the point cloud, in addition to color information, attribute information corresponding to each point generally includes a reflectance (reflectance) value. The reflectance value reflects a surface material of the object. Therefore, data of the point cloud generally includes position information and attribute information of a point. The position information of the point may also be referred to as geometric information of the point. For example, the geometric information of the point may be three-dimensional coordinate information (x, y, z) of the point. The attribute information of the point may include color information and/or reflectance, and the like. For example, the reflectance may be one-dimensional reflectance information (r). The color information may be any type of information in color space, or the color information may be three-dimensional color information, for example, RGB information. Herein, R represents red (red, R), G represents green (green, G), and B represents blue (blue, B). For another example, the color information may be luma and chroma (YCbCr, YUV) information, where Y represents luma (luma), Cb(U) represents a blue color difference, and Cr(V) represents a red color difference.

A point in a point cloud obtained according to a laser measurement principle may have three-dimensional coordinate information of the point and a reflectance value of the point. For another example, a point in a point cloud obtained according to a photographing measurement principle may have three-dimensional coordinate information of the point and three-dimensional color information of the point. For another example, a point in a point cloud obtained according to a laser measurement principle and a photographing measurement principle may have three-dimensional coordinate information of the point, a reflectance value of the point, and three-dimensional color information of the point.

FIG. 2A and FIG. 2B show a point cloud image and a data storage format corresponding to the point cloud image. FIG. 2A provides six angles of viewing a point cloud image, and FIG. 2B includes a file header information part and a data part. Header information includes a data format, a data representation type, a total quantity of points in a point cloud, and content represented by the point cloud. For example, the point cloud is in a ".ply" format and is represented by an ASCII code. The total quantity of the points in the point cloud is 207242, and each point has three-dimensional coordinate information (x, y, z) and three-dimensional color information (r, g, b).

According to acquisition methods, point clouds may be classified into the following three types:
static point cloud, for which an object is static, and a device for acquiring the point cloud is also static;
dynamic point cloud, for which an object is moving, but a device for acquiring the point cloud is static; and
dynamically acquired point cloud, for which a device for acquiring the point cloud is moving.

For example, according to usage, point clouds are classified into the following two types:
type 1: machine perception point cloud, which may be used in scenarios such as an autonomous navigation system, a real-time inspection system, a geographic information system, a visual sorting robot, and a disaster relief robot; and
type 2: human eye perception point cloud, which may be used in a point cloud application scenario such as digital cultural heritage, free viewpoint broadcasting, three-dimensional immersion communication, or three-dimensional immersion interaction.

A point cloud may flexibly and conveniently express a spatial structure and a surface attribute of a three-dimensional object or scene. Since the point cloud is obtained by directly performing sampling on a real object, an extremely strong sense of reality can be provided on a premise of ensuring precision. Therefore, the point cloud is widely applied in virtual reality gaming, computer-aided design, a geographic information system, an automatic navigation system, a digital cultural legacy, free viewpoint broadcasting, three-dimensional immersive remote presentation, three-dimensional reconstruction of a biological organ, and the like.

Point clouds are mainly collected in the following manners: computer generation, 3D laser scanning, 3D photographing measurement, and the like. A computer may be used to generate a point cloud of a virtual three-dimensional object or scene. 3D laser scanning may be used to obtain a point cloud of a three-dimensional object or scene in a static real world, and can acquire millions of point clouds per second. 3D photographing measurement may be used to obtain a point cloud of a three-dimensional object or scene in a dynamic real world, and can acquire tens of millions of point clouds per second. These technologies reduce costs and a time period of acquiring point cloud data, and improve data precision. The development in the manners of acquiring point cloud data makes it possible to acquire a large amount of point cloud data. With increasing application requirements, processing of massive 3D point cloud data encounters bottlenecks of limited storage space and transmission bandwidth.

Exemplarily, a point cloud video with a frame rate of 30 frames per second (fps) is used as an example. A quantity of points in each frame of point cloud is 700,000, and each point has coordinate information xyz (float) and color information RGB (uchar). In this case, a data volume of a 10-second point cloud video is approximately 0.7 million × (4 byte × 3 + 1 byte × 3) × 30 fps × 10s = 3.15 GB, where 1 byte is 10 bits. A data volume of a 10-second 1280 × 720 two-dimensional video with a YUV sampling format of 4:2:0 and a frame rate of 30 fps is approximately 1280 × 720 × 12 bit × 30 frames × 10s ≈ 0.39 GB, and a data volume of a 10-second two-view three-dimensional video is approximately 0.39 × 2 = 0.78 GB. It can be seen that a data volume of a point cloud video is far more than a data volume of a two-dimensional or three-dimensional video with a same length. Therefore, to better implement data management, save server storage space, and reduce transmission traffic and transmission time between servers and clients, point cloud compression becomes a key for promoting development of point cloud industries.

That is, since a point cloud is a set of massive points, storing the point cloud not only consumes a large amount of memory but also is non-conducive to transmission. In addition, there is no such bandwidth that can support direct transmission of a point cloud in a network layer without compression. Therefore, the point cloud needs to be compressed.

Currently, a point cloud encoding framework that can be used to compress a point cloud may be a geometry-based point cloud compression (geometry-based point cloud compression, G-PCC) encoding and decoding framework or a video-based point cloud compression (video-based point cloud compression, V-PCC) encoding and decoding framework provided by the moving picture experts group (moving picture experts group, MPEG), or may be an AVS-PCC encoding and decoding framework provided by an AVS. The G-PCC encoding and decoding framework may be used to compress a static point cloud of the type 1 and a dynamically acquired point cloud of the type 3, and may be based on a point cloud compression test platform (test model compression 13, TMC13). The V-PCC encoding and decoding framework may be used to compress a dynamic point cloud of the type 2, and may be based on a point cloud compression test platform (test model compression 2, TMC2). Therefore, the G-PCC encoding and decoding framework is also referred to as a point cloud codec TMC13, and the V-PCC encoding and decoding framework is also referred to as a point cloud codec TMC2.

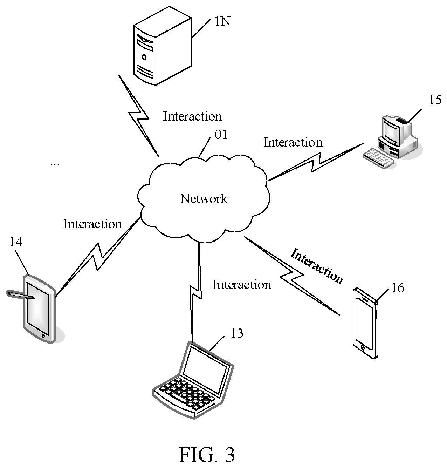

Embodiments of this application provide a network architecture of a point cloud encoding and decoding system including a decoding method and an encoding method. FIG. 3 is a schematic diagram of a network architecture for point cloud encoding and decoding according to an embodiment of this application. As shown in FIG. 3, the network architecture includes one or more electronic devices 13 to 1N and a communications network 01, where the electronic devices 13 to 1N may perform video interaction with each other by using the communications network 01. In an implementation process, the electronic device may be various types of devices that have a point cloud encoding and decoding function. For example, the electronic device may include a mobile phone, a tablet computer, a personal computer, a personal digital assistant, a navigator, a digital telephone, a video telephone, a television, a sensing device, a server, or the like. This is not limited in embodiments of this application. A decoder or an encoder in embodiments of this application may be the foregoing electronic device.

The electronic device in embodiments of this application has a point cloud encoding and decoding function, and generally includes a point cloud encoder (that is, an encoder) or a point cloud decoder (that is, a decoder).

The following describes a related technology by using a G-PCC encoding and decoding framework and an AVS encoding and decoding framework as an example.

It may be understood that, in a G-PCC encoding and decoding framework for a point cloud, to-be-encoded point cloud data is first partitioned into a plurality of slices through slicing (slice, also referred to as a strip). In each slice, geometric information of the point cloud and attribute information corresponding to each point are separately encoded.

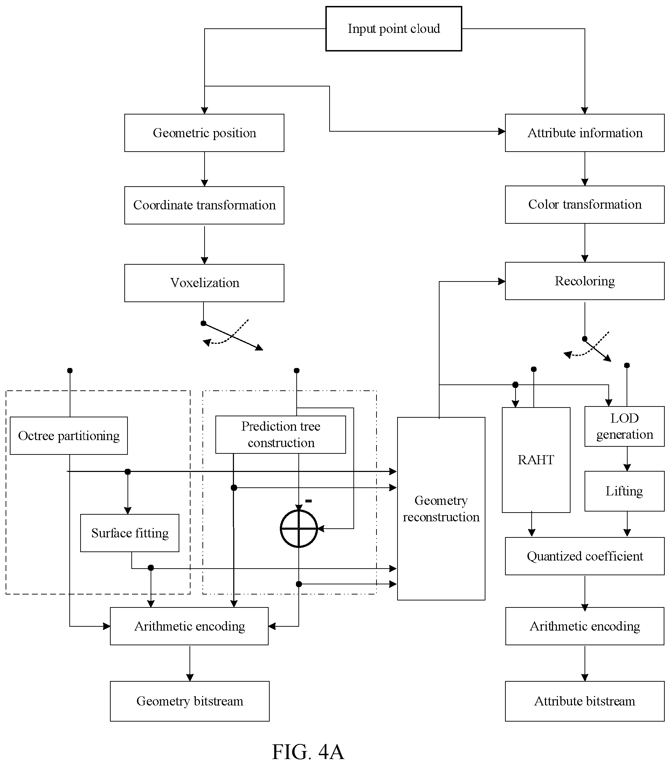

FIG. 4A is a schematic diagram of a framework of a G-PCC encoder. As shown in FIG. 4A, in a geometry encoding process, coordinate transform is performed on geometric information, so that an entire point cloud is included in a bounding box (bounding box), and then quantization is performed. The quantization in this step mainly plays a role of scaling. Due to rounding in the quantization, a part of the point cloud has same geometric information. Then, whether to remove duplicate points is determined based on a parameter. The process of quantization and removal of duplicate points is also referred to as voxelization. Next, octree partitioning or prediction tree construction is performed on the bounding box. In this process, arithmetic encoding is performed on points in leaf nodes generated by partitioning, to generate a binary geometric bitstream; or arithmetic encoding (surface fitting based on vertices) is performed on vertices (vertex) generated by partitioning, to generate a binary geometric bitstream. In an attribute encoding process, geometry encoding is already completed. After the geometric information is reconstructed, color transform needs to be performed first, to transform color information (that is, attribute information) from an RGB color space to a YUV color space. Then, the point cloud is colored again by using the reconstructed geometric information, so that attribute information that is not encoded corresponds to the reconstructed geometric information. Attribute encoding is mainly performed on color information. In a color information encoding process, there are mainly three transform methods. The first two methods depend on level of detail (level of detail, LOD) partitioning, namely distance-based lifting transform and prediction transform, while the third method is to directly perform RAHT. In all the three methods, the color information is transformed from a spatial domain to a frequency domain, a high-frequency coefficient and a low-frequency coefficient are obtained by transform, finally the coefficients are quantized, and then arithmetic encoding is performed on the quantized coefficients, to generate a binary attribute bitstream.

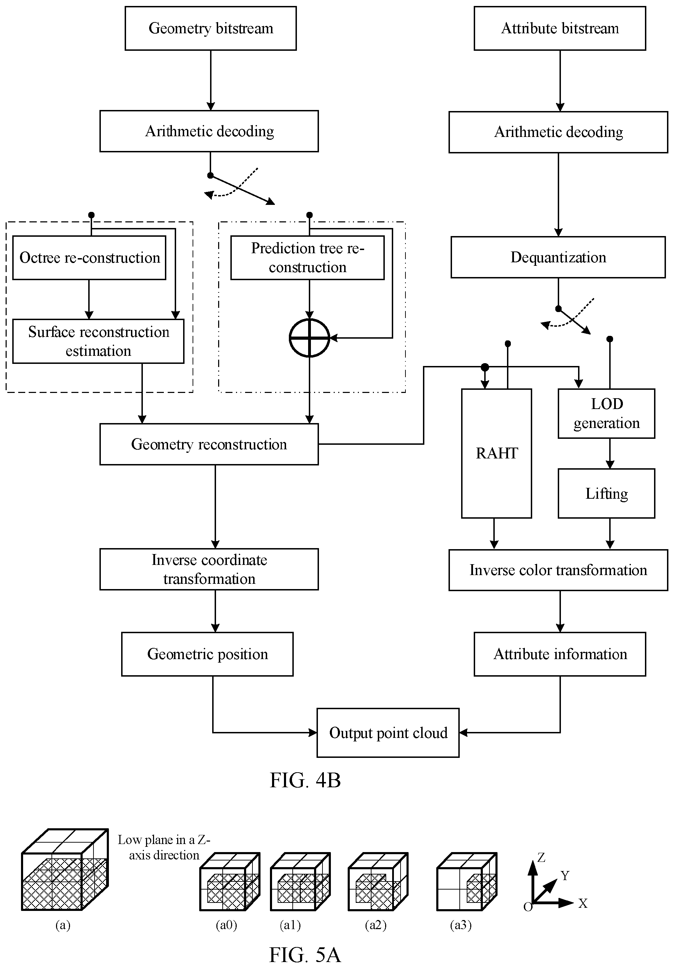

FIG. 4B is a schematic diagram of a framework of a G-PCC decoder. As shown in FIG. 4B, for an acquired binary bitstream, a geometric bitstream and an attribute bitstream in the binary bitstream are first separately decoded. During decoding of the geometric bitstream, geometric information of the point cloud is obtained through arithmetic decoding - octree reconstruction or prediction tree reconstruction - geometric reconstruction - inverse transform of coordinates. During decoding of the attribute bitstream, attribute information of the point cloud is obtained through arithmetic decoding - dequantization - LOD partitioning or RAHT - inverse transform of colors. Based on the geometric information and the attribute information, to-be-encoded point cloud data is restored (that is, the point cloud is outputted).

It should be noted that, as shown in FIG. 4A or FIG. 4B, current G-PCC geometry encoding and decoding may include octree geometry encoding and decoding (shown in a dashed box) and predictive geometry encoding and decoding (shown in a dash-dotted box).

Octree geometry encoding (octree geometry encoding, OctGeomEnc) includes the following steps. First, coordinate transform is performed on geometric information, so that an entire point cloud is included in a bounding box. Then, quantization is performed. The quantization in this step mainly plays a role of scaling. Due to rounding in the quantization, some points have same geometric information. Then, whether to remove duplicate points is determined based on a parameter. The process of quantization and removal of duplicate points is also referred to as voxelization. Next, partitioning of a tree (for example, an octree, a quadtree, or a binary tree) is continuously performed on the bounding box in a breadth-first traversal sequence, and an occupancy code of each node is encoded. In a related technology, a company proposes an implicit geometric partitioning manner. First, a bounding box (2*^{d^{x}}* , 2*^{d^{y}}* , 2*^{d^{z}}*) of a point cloud is calculated. It is assumed that *dₓ* > *d_{y}* > *d_{z}*, and the bounding box is correspondingly a cube. During geometric partitioning, first, binary tree partitioning is continuously performed based on an *x*-axis, to obtain two child nodes. Only when a condition *dₓ* = *d_{y}* > *d_{z}* is met, quadtree partitioning is continuously performed based on the *x*-axis and a *y*-axis, to obtain four child nodes. When a condition *dₓ* = *d_{y}* = *d_{z}* is finally met, octree partitioning is continuously performed until leaf nodes obtained after the partitioning are 1×1×1 unit cubes. Then, points in the leaf nodes are encoded, to generate a binary bitstream. In a process of partitioning based on a binary tree, a quadtree, or an octree, two parameters K and M are introduced. The parameter K indicates a maximum quantity of times of binary tree or quadtree partitioning before octree partitioning, and the parameter M is used to indicate that a side length of a minimum block corresponding to binary tree or quadtree partitioning is 2^{M}. In addition, K and M must meet the following condition: assuming that *d*ₘₐₓ = max (*dₓ*, *d_{y}, d_{z}*) and *d*ₘᵢₙ = min(*dₓ*, *d_{y}*, *d_{z}*), the parameter K meets *K* ≥ *d*ₘₐₓ - *d*ₘᵢₙ and the parameter M meets *M* ≥ *d*ₘᵢₙ. A reason why the parameters K and M meet the foregoing condition is that, in the current implicit geometric partitioning of G-PCC, partitioning manners in descending order of priorities are binary tree partitioning, quadtree partitioning, and octree partitioning. Only when a size of a node block does not meet a condition of binary tree or quadtree partitioning, octree partitioning is continuously performed on the node until leaf nodes of a minimum unit 1×1×1 are obtained. In an octree geometry encoding mode, geometric information of a point cloud may be effectively encoded by using correlation between neighboring points in space. However, for some relatively flat nodes or nodes that have a planar feature, encoding performance of the geometric information of the point cloud may be further improved by using plane encoding.

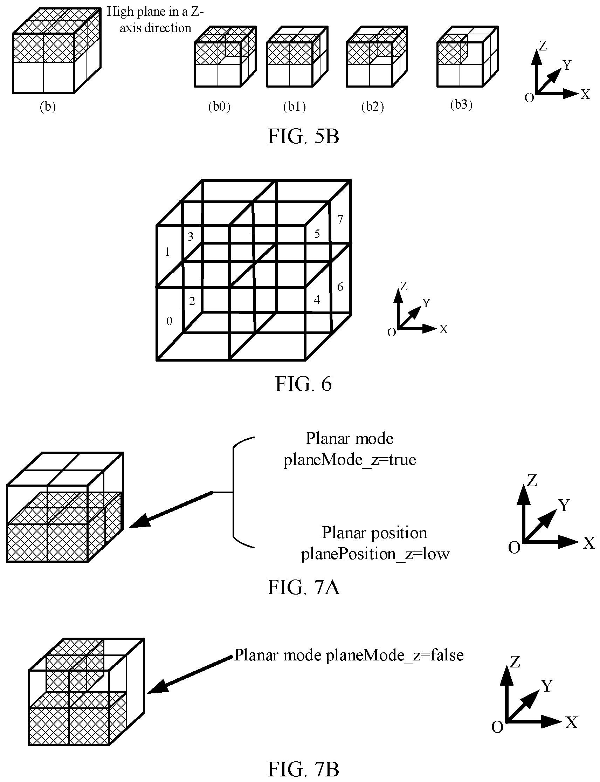

Exemplarily, FIG. 5A and FIG. 5B are schematic diagrams of planar positions. FIG. 5A is a schematic diagram of low planar positions in a Z-axis direction, and FIG. 5B is a schematic diagram of high planar positions in a Z-axis direction. As shown in FIG. 5A, (a), (a0), (a1), (a2), and (a3) herein all belong to low planar positions in a Z-axis direction. By using (a) as an example, it can be seen that four occupied child nodes in a current node are all located in low planar positions in a Z-axis direction of the current node. In this case, it may be considered that the current node belongs to a Z-plane that is a low plane in the Z-axis direction. Similarly, as shown in FIG. 5B, (b), (b0), (b1), (b2), and (b3) herein all belong to high planar positions in a Z-axis direction. By using (b) as an example, it can be seen that four occupied child nodes in a current node are located in high planar positions in a Z-axis direction of the current node. In this case, it may be considered that the current node belongs to a Z-plane that is a high plane in the Z-axis direction.

Further, octree encoding performance is compared against plane encoding performance by using (a) in FIG. 5A as an example. FIG. 6 is a schematic diagram of a node encoding sequence, that is, node encoding is performed in a sequence of 0, 1, 2, 3, 4, 5, 6, and 7 shown in FIG. 6. Herein, if octree encoding is used for (a) in FIG. 5A, occupancy information of the current node is represented as 10101010. However, if plane encoding is used, first, an identifier needs to be encoded, to indicate that the current node is a plane in the Z-axis direction. Then, if the current node is a plane in the Z-axis direction, a planar position of the current node also needs to be represented. Next, only occupancy information (that is, occupancy information of four child nodes 0, 2, 4, and 6) of low-plane nodes in the Z-axis direction needs to be encoded. Therefore, if the current node is encoded based on plane encoding, only six bits (bit) need to be encoded. Compared with octree encoding in a related technology, plane encoding reduces representation by two bits. Based on this analysis, plane encoding has more evident encoding performance than octree encoding. Therefore, for an occupied node, if plane coding is performed in a dimension, first, planar mode (planarMode) information and planar position (PlanePos) of the current node in the dimension need to be represented. Then, occupancy information of the current node is encoded based on planar information of the current node. Exemplarily, FIG. 7A is a schematic diagram of a piece of planar mode information. As shown in FIG. 7A, a Z-axis direction herein is a low plane. Correspondingly, a value of planar mode information is true (true) or 1, that is, planarMode__{Z} = true. A value of planar position information is low (low), that is, PlanePosition__{Z} = low. FIG. 7B is a schematic diagram of another piece of planar mode information. As shown in FIG. 7B, a Z-axis direction herein is not a plane. Correspondingly, a value of planar mode information is false (false) or 0, that is, planarMode__{Z} = false.

It should be noted that for PlaneMode_ᵢ, 0 represents that a current node is not a plane in an i-axis direction, and 1 represents that the current node is a plane in the i-axis direction. If the current node is a plane in the i-axis direction, for PlanePosition_ᵢ, 0 indicates that the current node is a plane in the i-axis direction and has a low planar position, and 1 indicates that the current node is a high plane in the i-axis direction. Herein, i represents a coordinate dimension, which may be an X-axis direction, a Y-axis direction, or a Z-axis direction. Therefore, i = 0, 1, or 2.

The octree geometry encoding mode has an efficient compression rate only for points that are correlated in space. For a point that is in an isolated position in a geometric space, complexity may be greatly reduced by using a direct coding model (direct coding model, DCM). For all nodes in an octree, usage of the DCM is not represented by flag information, but is inferred by using information about a parent node and a neighbor information of a current node. Whether the current node is eligible for DCM encoding is determined in the following three manners.
(1) The current node has no sibling nodes, that is, the parent node of the current node has only one child node, and a parent node of the parent node of the current node has only two occupied child nodes, that is, the current node has a maximum of one neighboring node.
(2) The parent node of the current node has only one occupied child node, that is, the current node, and six neighboring nodes that each share a face with the current node are all empty nodes.
(3) A quantity of sibling nodes of the current node is greater than 1.

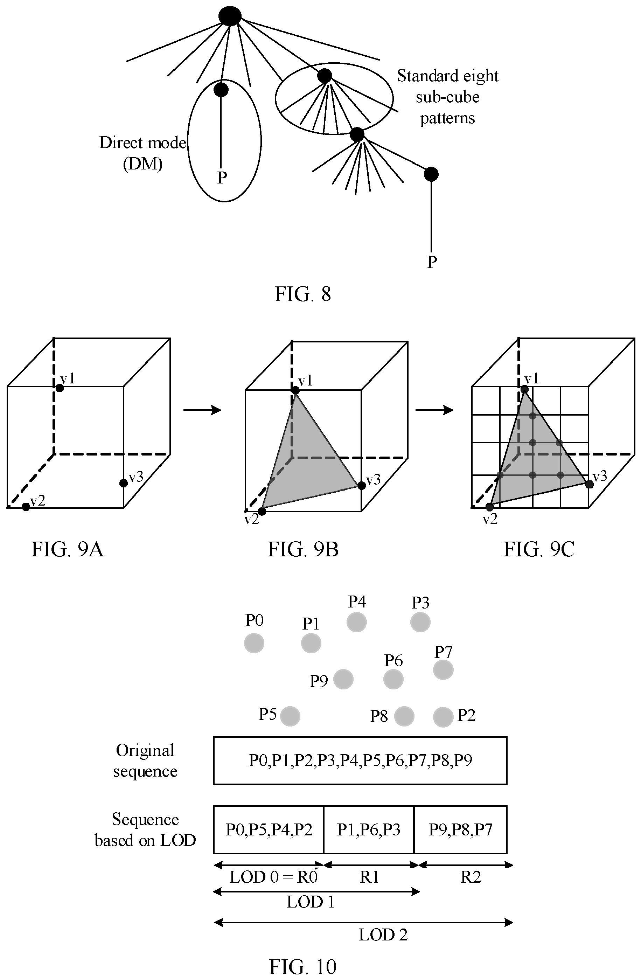

Exemplarily, FIG. 8 is a schematic diagram of IDCM encoding. If a current node is not eligible for DCM encoding, octree partitioning is performed on the current node. If the current node is eligible for DCM encoding, a quantity of points included in the node is further determined. If the quantity of points is less than a threshold (for example, 2), DCM encoding is performed on the node. Otherwise, octree partitioning is continued. When the DCM encoding mode is applied, first, it needs to be encoded whether the current node is a real isolated point, that is, IDCM_flag. When IDCM_flag is true, DCM encoding is used for the current node. Otherwise, octree encoding is still used. When the current node meets a DCM encoding condition, a DCM encoding mode needs to be encoded for the current node. Currently, there are two DCM modes: (a) There is only one point (or a plurality of points that are duplicate points); (b) There are two points. Finally, geometric information of each point needs to be encoded. Assuming that an edge length of a node is 2*^{d}*, d bits are required for encoding each component of geometric coordinates of the node, and the bit information is directly encoded into a bitstream. It should be noted herein that, when a LiDAR point cloud is encoded, predictive encoding is performed on coordinate information in three dimensions by using a LiDAR collection parameter, thereby further improving encoding performance of geometric information.

It should be noted that, when nodes are partitioned down to leaf nodes, in a case of lossless geometry encoding, a quantity of duplicate points in the leaf nodes needs to be encoded. Finally, occupancy information of all nodes is encoded to generate a binary bit stream. In addition, currently, a plane encoding mode is introduced into G-PCC. In a process of geometric partitioning, it is determined whether child nodes of a current node are on a same plane. If the child nodes of the current node meet a condition of being on the same plane, the child nodes of the current node are represented by the plane.

For octree geometry decoding, in a breadth-first traversal sequence, before decoding occupancy information of each node, the decoding end first determines, by using reconstructed geometric information, whether to perform planar decoding or IDCM decoding on a current node. If the current node meets a condition of planar decoding, the decoding end first decodes planar mode information and planar position information of the current node, and then decodes, based on planar information, occupancy information of the current node. If the current node meets a condition of IDCM decoding, the decoding end first decodes whether the current node is a real IDCM node. If the current node is a real IDCM node, the decoding end parses a DCM decoding mode of the current node, and then may obtain a quantity of points in the current DCM node. Finally, the decoding end decodes geometric information of each point. For a node that meets neither plane decoding nor DCM decoding, occupancy information of the current node is decoded. In this manner, an occupancy code of each node is obtained through continuous parsing, and nodes are successively partitioned until 1×1×1 unit cubes are obtained. A quantity of points included in each leaf node is obtained through parsing, and finally, reconstructed geometric information of a point cloud is restored.

For geometric information encoding based on a triangle soup (triangle soup, trisoup), geometric partitioning needs to be performed first in a geometric information encoding framework based on a trisoup. However, different from that in geometric information encoding based on a binary tree, a quadtree, or an octree, in this method, a point cloud does not need to be partitioned into unit cubes with side lengths of 1×1×1, but is partitioned until a block (block) with a side length of W is obtained. Based on a surface formed by point clouds in each block, a maximum of twelve vertices (vertex) generated by the surface and twelve edges of the block are obtained. Vertex coordinates of each block are successively encoded to generate a binary bitstream.

When reconstructing geometric information of a point cloud based on a trisoup, a decoding end first decodes vertex coordinates, to reconstruct a triangular patch. This process is shown in FIG. 9A, FIG. 9B, and FIG. 9C. There are three vertices (v1, v2, and v3) in the block shown in FIG. 9A. A triangle soup is formed by the three vertices in a specific order, that is, trisoup, as shown in FIG. 9B. Then, sampling is performed on the triangle soup, and obtained sampling points are used as a reconstructed point cloud in the block, as shown in FIG. 9C.

Predictive geometry encoding (predictive geometry coding, PredGeomTree) includes: sorting points of an input point cloud in sequence first, where sorting methods currently used include disordering, Morton ordering, azimuth ordering, and radial distance ordering. At an encoding end, a prediction tree structure is established in two different modes, including KD-tree (a high-latency slow mode) and a low-latency fast mode (by using LiDAR calibration information). When the LiDAR calibration information is used, points are assigned to different lasers, and a prediction tree structure is established according to the different lasers. Next, based on the prediction tree structure, each node in the prediction tree is traversed, geometric position information of the nodes is predicted by selecting different prediction modes, to obtain prediction residuals, and the geometric prediction residuals are quantized by using a quantization parameter. Finally, with continuous iterations, the prediction residuals of position information of the prediction tree nodes, the prediction tree structure, the quantization parameter, and the like are encoded to generate a binary bitstream.

For predictive geometry decoding, a decoding end continuously parses the bitstream to reconstruct a prediction tree structure, obtains prediction residual information of a geometric position of each prediction node and a quantization parameter through the parsing, and dequantizes the prediction residual to obtain reconstructed geometric position information of each node and finally complete geometric reconstruction.

After geometry encoding is completed, geometric information needs to be reconstructed. Currently, attribute encoding is mainly performed on color information. First, the color information is converted from an RGB color space to a YUV color space. Then, the point cloud is colored again by using the reconstructed geometric information, so that attribute information that is not encoded corresponds to the reconstructed geometric information. During encoding of the color information, there are mainly two transform methods. One method is distance-based lifting transform based on LOD partitioning, and the other method is to directly perform RAHT transform. In the two methods, the color information is transformed from a spatial domain to a frequency domain, to obtain a high-frequency coefficient and a low-frequency coefficient. Finally, the coefficients are quantized and encoded to generate a binary bitstream. For details, reference may be made to FIG. 4A and FIG. 4B.

Further, when the attribute information is predicted by using the geometric information, a Morton code is used to perform nearest neighbor search. The Morton code corresponding to each point in the point cloud may be obtained by using geometric coordinates of the point. The following describes a specific method for calculating the Morton code. For three-dimensional coordinates in which each component is represented by a binary number with d bits, the three components may be represented as: $x = {\sum }_{l = 1}^{d} {2}^{d - l} {x}_{l} , y = {\sum }_{l = 1}^{d} {2}^{d - l} {y}_{l} , z = {\sum }_{l = 1}^{d} {2}^{d - l} {z}_{l}$

Herein, *x_{ℓ},y_{ℓ},z_{ℓ}* ∈ {0,1} are respectively binary values corresponding to *x*, *y*, and z from a most significant bit (*ℓ* = 1) to a least significant bit (*ℓ* = d). The Morton code M is a crosswise arrangement *x_{ℓ},y_{ℓ},z_{ℓ}* of *x, y,* and *z* to the least significant bit, starting from the most significant bit. A calculation formula of M is as follows: $M = {\sum }_{l = 1}^{d} {2}^{3 \left(d-l\right)} \left(4{x}_{l}+2{y}_{l}+{z}_{l}\right) = {\sum }_{l ′ = 1}^{3 d} {2}^{3 d - l ′} {m}_{l ′}$

Herein, m_{ℓ'} ∈ {0,1} is values of M from the most significant bit (*ℓ'* = 1) to the least significant bit (*ℓ'* = 3d). After the Morton code M of each point in the point cloud is obtained, the points in the point cloud are arranged in ascending order of Morton codes, and a weight value w of each point is set to 1.

As mentioned above, encoding of attribute information mainly involves three transform manners: lifting transform, prediction transform, and RAHT transform. In lifting transform and prediction transform, prediction and transform are performed on a point cloud based on generation order of LODs, while in RAHT transform, adaptive transform is performed on attribute information based on a construction hierarchy of an octree from bottom to top. These three transform encoding manners are described next. The prediction transform encoding manner is first described in detail below.

Currently, a G-PCC attribute prediction module uses a nearest neighbor attribute predictive encoding scheme based on an LOD structure. An LOD construction method includes a distance-based LOD construction scheme, an LOD construction scheme based on a fixed sampling rate, an octree-based LOD construction scheme, and the like. In a distance-based LOD construction scheme, before LOD construction, Morton sorting is performed on a point cloud to ensure relatively strong attribute correlation between neighboring points. FIG. 10 is a schematic diagram of distance-based LOD construction. As shown in FIG. 10, according to L Manhattan (Manhattan) distances (dl) that are set in advance, where l = 0, 1, ..., L-1, a point cloud is partitioned into L different levels of detail (Rl), where l = 0, 1, ..., L-1, and (dl)l = 0, 1, ..., L-1 meets dl < dl-1.

An LOD construction process is as follows: (1) First, all points in the point cloud are marked as unaccessed, and a set V is established to store point sets that have been accessed. (2) During each iteration, all the points in the point cloud are traversed. If a current point has been accessed, the point is ignored. Otherwise, a minimum distance D from the current point to the point set V is calculated. If D < dl, the point is ignored. If D ≥ dl, the current point is marked as accessed and added to a refinement layer Rl and the point set V. (3) Points in a level of detail LOD l include points in refinement layers R0, R1, R2, ..., and Rl. (4) The foregoing steps are repeated until all the points are marked as accessed.

Based on the LOD structure, attribute information of each point is linearly weighted and predicted by using reconstructed attribute information of points in the same LOD level or a higher LOD level. A maximum quantity of reference neighboring points for prediction is determined by a high-level syntax element of an encoder. For an attribute of each point, at an encoding end, attribute information of N found nearest neighboring points is selected, by using a rate-distortion optimal algorithm, for weighted prediction, or attribute information of a single nearest neighboring point is selected for prediction. Finally, a selected prediction mode and a prediction residual are encoded. In the LOD structure, a formula for predicting attribute information of a current point may be as shown as follows: ${Attr}_{i} ′ = Round \left(\frac{1}{N}{\sum }_{m ∈ {p}_{i}} \frac{\frac{1}{{D}_{m}^{2}}}{{\sum }_{m ∈ {p}_{i}} \frac{1}{{D}_{m}^{2}}}{Attr}_{m}\right)$

Herein, N represents a quantity of predicted points in a set of nearest neighboring points of a current point i, Pi represents a sum of N nearest neighboring points of the current point i, Dm represents a spatial geometric distance from the nearest neighboring point m to the current point i, Attrm represents reconstructed attribute information of the nearest neighboring point m, Attrᵢ' represents predicted attribute information of the current point i, and the quantity N of the points is a preset value.

To balance attribute encoding performance and parallel processing between different LOD layers, a switch may be introduced into a high-level syntax element of the encoder. This switch may control whether to introduce intra-LOD layer prediction. For example, if the switch is enabled, intra-LOD layer prediction is enabled, and points in a same LOD layer may be used for prediction. It should be noted that intra-LOD layer prediction is consistently used when a quantity of LOD layers is 1.

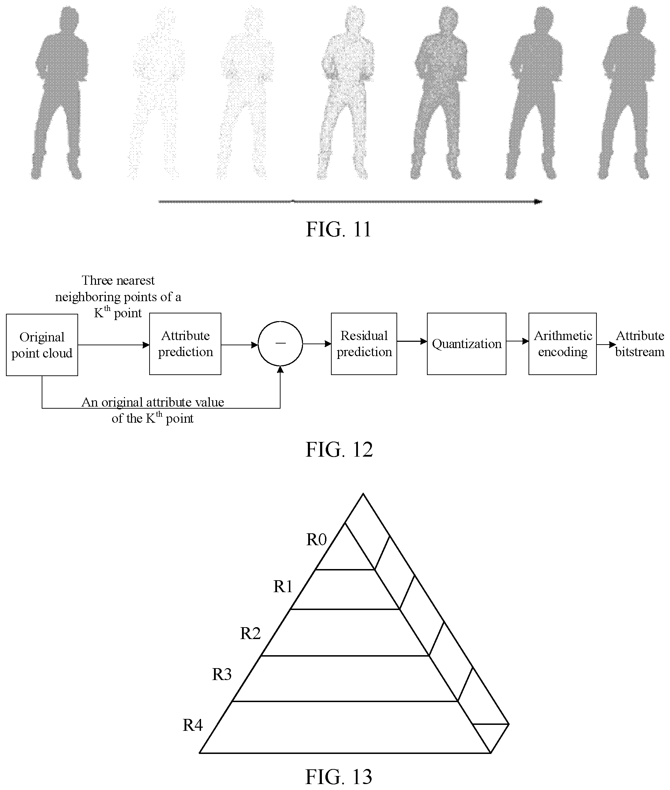

FIG. 11 is a schematic diagram of a generation process of a distance-based LOD point cloud. As shown in FIG. 11, the first image on the left is an original point cloud, the second image on the left represents outer contour of the point cloud, and in the subsequent images, as the refinement layers gradually increase, description of details of the point cloud becomes clearer. The following describes in detail a prediction process of attribute information of a point cloud having an LOD structure.

FIG. 12 is a schematic diagram of an encoding process of attribute information of an LOD point cloud. After LOD construction is completed, first, three nearest neighboring points of a current to-be-encoded point are found from encoded data points according to generation order of LODs. Reconstructed attribute values of the three nearest neighboring points are used as candidate predicted values of the current to-be-encoded point. Then, an optimal predicted value is selected from the candidate predicted values according to a rate-distortion optimal algorithm. For example, as shown in Table 1, when an attribute value of a point P2 in FIG. 10 is encoded, a prediction variable index of an attribute value of the nearest neighboring point P4 may be set to 1, prediction variable indexes of attribute values of the second nearest neighboring point P5 and the third nearest neighboring point P0 are set to 2 and 3, respectively, and prediction variable indexes of weighted average values of the points P0, P5, and P4 are set to 0. Finally, an optimal prediction variable is selected by using the rate-distortion optimal algorithm. A formula for the weighted averaging is as follows: ${\hat{a}}_{i} = Round \left({\sum }_{j = 0}^{2} \frac{{{w}^{˜}}_{ij}}{{\sum }_{j = 0}^{2} {{w}^{˜}}_{ij}}{{a}^{˜}}_{j}\right)$

Herein, *w̃ᵢⱼ* represents a spatial geometric weight from a neighboring point *j* to a current point *i*. ${{w}^{˜}}_{ij} = \frac{1}{{\left({x}_{i}-{x}_{ij}\right)}^{2} + {\left({y}_{i}-{y}_{ij}\right)}^{2} + {\left({z}_{i}-{z}_{ij}\right)}^{2}}$

Herein, *âᵢ* represents a predicted attribute value of the current point *i, j* represents indexes of the three neighboring points, *ãⱼ* represents a reconstructed attribute value of a neighboring point, *xᵢ,yᵢ,zᵢ* are geometric position coordinates of the current point *i,* and *xᵢⱼ,yᵢⱼ,zᵢⱼ* are geometric coordinates of the neighboring point *j.*

**Table 1**

| Prediction mode | Predicted value |
|---|---|
| 0 | Weighted averaging of attributes of the three nearest neighbors |
| 1 | P4 (attribute value of the nearest neighbor) |
| 2 | P5 (attribute value of the second nearest neighbor) |
| 3 | P0 (attribute value of the third nearest neighbor) |

The predicted attribute value (*âᵢ*)_{*i*∈0...*k*-1} of the current point i is obtained through the foregoing prediction (k is a total quantity of points in a point cloud). If (*aᵢ*)_{*i*∈0...*k*-1} is an original attribute value of the current point, the attribute residual (*rᵢ*)_{*i*∈0}..._{*k*-1} is denoted as: ${r}_{i} = {a}_{i} - {\hat{a}}_{i}$

Further, the prediction residual is quantized: ${Q}_{i} = \frac{{r}_{i}}{Qs}$

In the formula (7), *Qᵢ* represents the quantized attribute residual of the current point *i*, and *Qs* is a quantization step (Quantization step, Qs), which may be calculated by using a quantization parameter (quantization parameter, QP). After quantization, arithmetic encoding is performed on the quantized coefficient to generate an attribute bit rate finally.

During the encoding process, the encoding end reconstructs the attribute value of the current point i. The purpose of reconstruction is for prediction of subsequent points. Before the attribute value is reconstructed, a residual is dequantized, and *r̂ᵢ* is denoted as the dequantized residual. ${\hat{r}}_{i} = {Q}_{i} \times Qs$

*r̂ᵢ* and the predicted value *âᵢ* are added to obtain the reconstructed value *âᵢ* of the point *i*: ${{a}^{˜}}_{i} = {\hat{r}}_{i} + {\hat{a}}_{i}$

It may be learned from the foregoing description that, based on LOD partitioning, prediction of the attribute value of the current point requires nearest neighbor search. Currently, there are two main types of nearest neighbor search manners: intra-frame nearest neighbor search and inter-frame nearest neighbor search. The following describes in detail these two nearest neighbor search manners.

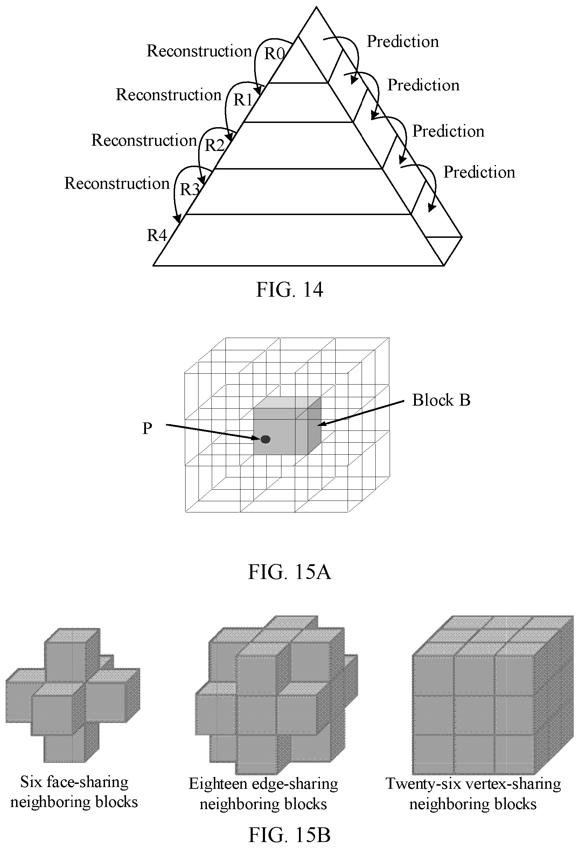

Intra-frame nearest neighbor search may be classified into two manners: inter-layer nearest neighbor search and intra-layer nearest neighbor search. First, inter-layer nearest neighbor search is described. FIG. 13 is a schematic diagram of a structure of refinement layers obtained by LOD partitioning. As shown in FIG. 13, after LOD partitioning, different refinement layers R form a pyramid-like structure. The manner of inter-layer nearest neighbor search may be as shown in FIG. 14. First, based on the manner shown in FIG. 10, geometric information is partitioned to obtain different LOD layers: LOD 0, LOD 1, and LOD 2. In the inter-layer nearest neighbor search process, points in LOD 0 are used to predict attributes of points in the next LOD layer. Next, a process of inter-layer nearest neighbor search is described in detail.

During an entire LOD partitioning process, there are three sets: O(k), L(k), and I(k). Herein, k denotes an index of an LOD layer during LOD partitioning, and I(k) denotes an input point set for current LOD layer partitioning. Sets O(k) and L(k) are obtained by LOD partitioning, the set O(k) stores a set of sampling points, and L(k) is a set of points in the current LOD layer. The entire LOD partitioning process is as follows:
(1) Initialization;
   *if k*= 0, *L*(*k*)←{} otherwise *L*(*k*)←*L*(*k*-1)
   *O*(*K*)**←**{}
(2) By using an LOD partitioning algorithm, the sampling points are stored in O(k), and the remaining points fall into L(k).
(3) When a next time of iteration is performed, *I*←*O*(*k*).

It should be noted herein that because the entire LOD partitioning process is performed based on a Morton code, O(k), L(k), and I(k) store Morton code indexes corresponding to points. When inter-layer nearest neighbor search is performed, that is, nearest neighbor search is performed on the set O(k) for the points in the set L(k), a specific search manner is detailed as follows:

First, nearest neighbor search is performed based on a spatial relationship. As shown in FIG. 15A, when a current point P is predicted, neighbor search is performed by using a parent block (Block B) corresponding to the point P. FIG. 15B is a schematic diagram of neighboring blocks each sharing a face, neighboring blocks each sharing an edge, and neighboring blocks each sharing a vertex with a current parent block. As shown in FIG. 15B, points within neighboring blocks each sharing a face and neighboring blocks each sharing an edge with the current parent block are searched for in FIG. 15B for attribute prediction. In other words, a corresponding spatial block is obtained based on coordinates of the current point, and then nearest neighbor search is performed in a previously encoded LOD layer, to search for a spatial block that shares a face, a spatial block that shares an edge, or a spatial block that shares a vertex with the current block, thereby obtaining N neighbors of the current point.

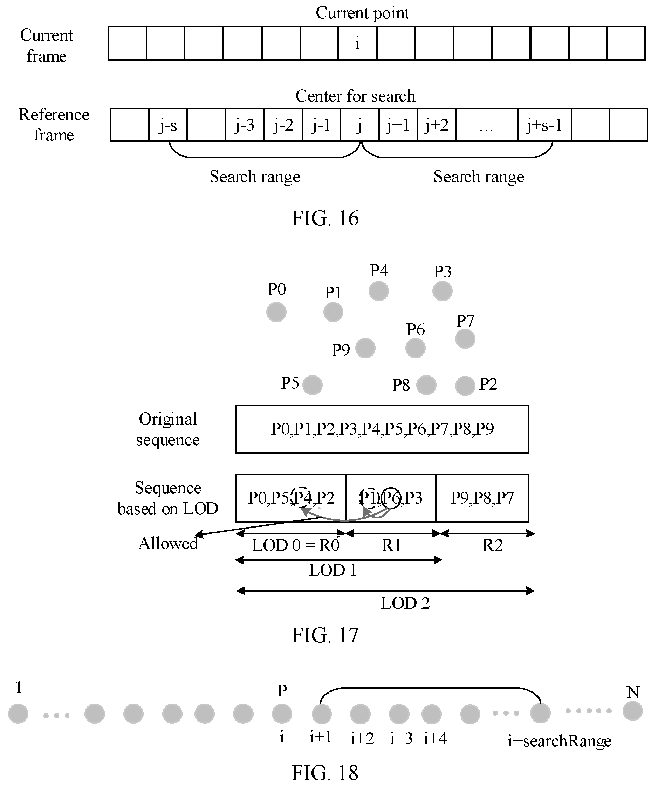

If N neighbors of the current point are still not obtained after performing nearest neighbor search within the face-sharing block, the edge-sharing block, or the vertex-sharing block, then N neighbors of the current point are obtained based on a fast search algorithm. For a specific manner, reference may be made to FIG. 16. FIG. 16 is a schematic diagram of a manner of performing nearest neighbor search for a current point. As shown in FIG. 16, when inter-layer attribute prediction is performed, a Morton code corresponding to the current point may be obtained by using geometric coordinates of the current point. Then, a reference frame is searched, based on the Morton code of the current point, for the first reference point (j) whose Morton code is greater than the Morton code of the current point, and nearest neighbor search is performed within a range [j-searchRange, j+searchRange]. A specific manner of updating the nearest neighbors is the same as that of inter-frame nearest neighbor search, and is described when inter-frame nearest neighbor search is described. Therefore, it is not repeated here. The following describes in detail intra-layer nearest neighbor search.

FIG. 17 is a schematic diagram of a manner of performing intra-layer nearest neighbor search for attribute information. As shown in FIG. 17, when an intra-layer prediction manner is enabled, nearest neighbor search is performed in a set of encoded points in a same LOD layer, to obtain N neighbors of a current point (inter-layer nearest neighbor search is performed similarly). A manner of performing nearest neighbor search may be based on a fast search. For example, as shown in FIG. 18, assuming that an index of a Morton code of the current point is i, nearest neighbor search is performed within [i+1, i+searchRange]. A specific nearest neighbor search manner is consistent with an inter-frame fast search manner on a block basis, and details are not described herein again. The following describes in detail a manner of inter-frame nearest neighbor search.

With continued reference to FIG. 16, when inter prediction of attributes is performed, a Morton code corresponding to the current point is obtained based on geometric coordinates of the current point. Then, a reference frame is searched, based on the Morton code of the current point, for the first reference point (j) whose Morton code is greater than the Morton code of the current point, and nearest neighbor search is performed within a range [j-searchRange, j+searchRange].

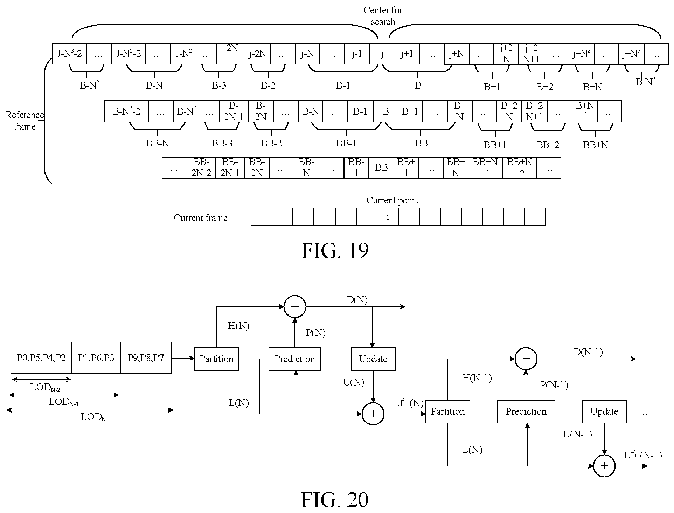

Currently, intra-frame nearest neighbor search and inter-frame nearest neighbor search are performed on a block basis. FIG. 19 is a schematic diagram of a neighborhood search prediction structure based on Morton codes. For example, as shown in FIG. 19, when neighbor search is performed on a current point (with a Morton code index of i), points in a reference frame are divided into N (N = 3) layers according to Morton codes. A specific division method may be as follows.

First layer: Assuming that a quantity of the points in the reference frame is numPoints, first, every M (M = 25 = 32) points in the reference frame are allocated to one block.

Second layer: On a basis of the first layer, every M (M = 25 = 32) blocks of the first layer are allocated to one block according to order of Morton codes.

Third layer: On a basis of the second layer, every M (M = 25 = 32) blocks of the first layer are allocated to one block according to order of the Morton codes.

Finally, a prediction structure shown in FIG. 19 is obtained.

When attribute prediction is performed based on the prediction structure shown in FIG. 19, assuming that the index of the Morton code of the current to-be-encoded point is i, the first point whose Morton code is greater than or equal to the Morton code of the current point is obtained in the reference frame, where an index of this point is j. A block index of the reference point is calculated based on j. A specific calculation manner is as follows.
First layer: BucketSize_0 = 25 = 32;
Second layer: BucketSize_1 = 25 = 32 × BucketSize_0 = 1024;
Third layer: BucketSize_2 = 25 = 32 × BucketSize_1 = 32768.

Assuming that a reference range in a prediction frame of the current point is [j-searchRange, j+searchRange], a start index of the third layer is calculated by using j-searchRange, and an end index of the third layer is calculated by using j+searchRange. First, it is determined, in blocks of the third layer, whether nearest neighbor search needs to be performed on some blocks of the second layer. Then, it is determined whether nearest neighbor search needs to be performed on each block of the first layer. If nearest neighbor search needs to be performed on some blocks of the first layer, point-by-point determination is performed on points in some blocks of the first layer, to update nearest neighbors. The following describes a manner of calculating blocks based on indexes.

Assuming that the index of the Morton code corresponding to the current point is denoted as index, an index of a corresponding block in the third layer is as follows: $idx _ 2 = index / BucketSize _ 2$

After the index idx_2 of the block in the third layer is obtained, a start index and an end index of blocks corresponding to the current block in the second layer may be obtained by using idx_2: $startIdx 1 = idx _ 2 \times BucketSize _ 1$ $endIdx = idx _ 2 \times BucketSize _ 1 + BucketSize _ 1 - 1$

Indexes of blocks in the first layer are obtained based on the indexes of the blocks in the second layer by using the same algorithm.

During nearest neighbor search on a block basis, it is determined whether nearest neighbor search needs to be performed on the current block, that is, it is determined whether a block is selected for nearest neighbor search by screening. Each spatial block may be represented by two variables minPos and maxPos, where minPos represents a minimum value of the block, and maxPos represents a maximum value of the block. It is assumed that a distance to the farthest point in N found neighbors of the current point is Dist, coordinates of the to-be-encoded point are (x, y, z), and the current block is represented as (minPos, maxPos), where minPos is a minimum value in the three dimensions of the bounding box, and maxPos is a maximum value in the three dimensions of the bounding box. In this case, a distance D between the current point and the bounding box is calculated as follows: $int dx = int \left(std::max\left(std::max\left(minPos\left[0\right]-point\left[0\right], 0\right),point\left[0\right]-maxPos\left[0\right]\right)\right)$ $int dy = int \left(std::max\left(std::max\left(minPos\left[1\right]-point\left[1\right], 0\right),point\left[1\right]-maxPos\left[1\right]\right)\right)$ $int dz = int \left(std::max\left(std::max\left(minPos\left[2\right]-point\left[2\right], 0\right),point\left[2\right]-maxPos\left[2\right]\right)\right)$ $D = dx + dy + dz$

When D is less than or equal to Dist, the points in the current block are traversed.

The prediction transform encoding manner of the attribute information of the point cloud is described above, and a lifting transform encoding manner of attribute information of a point cloud is described in detail below.

FIG. 20 is a schematic diagram of an encoding process of lifting transform. As shown in FIG. 20, the lifting transform also performs predictive encoding on an attribute of a point cloud based on LODs. Different from prediction transform described above, lifting transform divides LODs into high and low layers, then performs prediction in reverse order of generating LOD layers, and updates quantization weights of points in low LOD layers by introducing an update operator in a prediction process, to improve prediction accuracy. An attribute value of a point in a low LOD layer is frequently used for prediction of an attribute value of a point in a high LOD layer, and therefore the point in the low LOD layer should have greater influence. Still referring to FIG. 20, the encoding manner of lifting transform may be divided into three steps: a partitioning process, a prediction process, and an update process. These three steps are described in detail next.

### Step 1: Partitioning process.

In the partitioning process, the overall LOD layers are divided into a low LOD layer *L*(*N*) and a high LOD layer *H*(*N*). If a point cloud has three LOD layers, that is, (*LODₗ*)_{*l*=0,1,2}, after the division, *LOD*₂ is the high LOD layer and is denoted as *H*(*N*), and (*LODₗ*)_{*l*=0,1} is the low LOD layer and is denoted as *L*(*N*).

### Step 2: Prediction process.

For a point in the high LOD layer, attribute information of the nearest neighboring point selected from the low layer is used as a predicted attribute value *P*(*N*) of a current to-be-encoded point, and a prediction residual *D*(*N*) is denoted as: $D \left(N\right) = H \left(N\right) - P \left(N\right)$

### Step 3: Update process.

An attribute prediction residual *D*(*N*) in the high LOD layer is updated, to obtain *U*(*N*), and *U*(*N*) is used to lift an attribute value of a point in the low LOD layer, as shown in the following formula: $L ′ \left(N\right) = L \left(N\right) + U \left(N\right)$

The foregoing processes are continuously iterated in descending order of LODs until the lowest LOD layer is processed.

In the LOD-based prediction solution, a point in a low LOD layer has greater influence. In a transform method based on lifting wavelet transform, a quantization weight is introduced, and a prediction residual D(N) is updated according to the prediction residual D(N) and a distance between a prediction point and a neighboring point. Finally, adaptive quantization is performed on the prediction residual by using the quantization weight in the transform process. It should be noted that, at a decoding end, a quantization weight value of each point may be determined through geometric reconstruction, and therefore, the quantization weight does not need to be encoded.

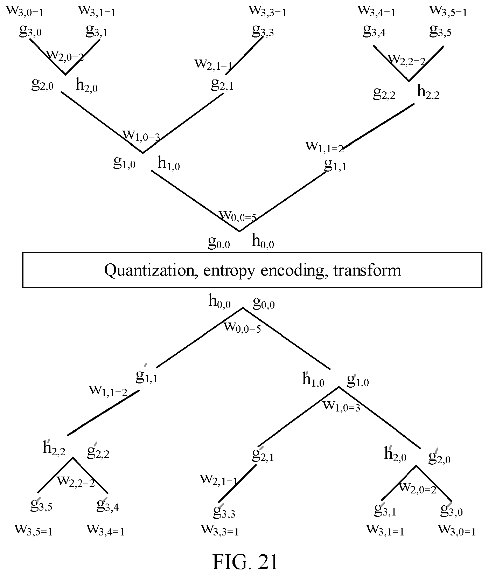

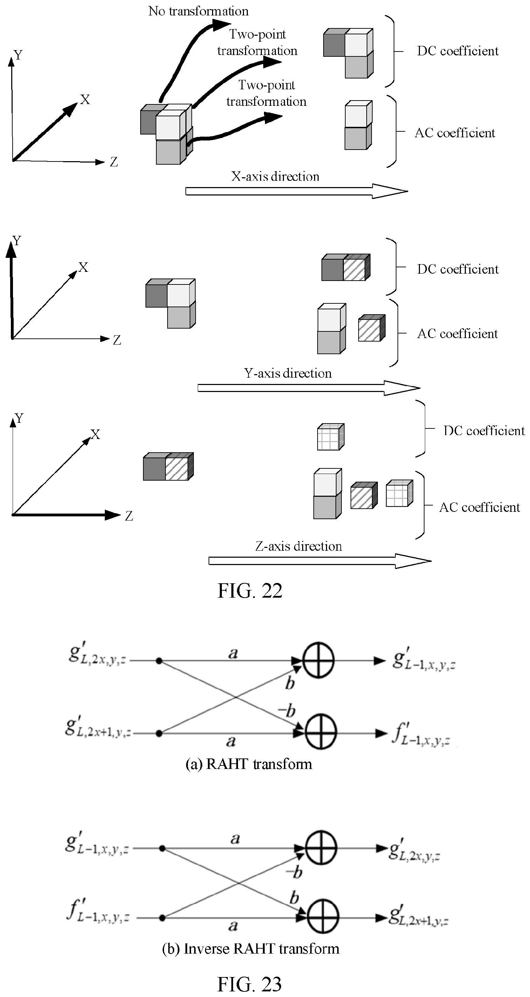

For the RAHT transform, Haar wavelet transform is used, which may transform attribute information of a point cloud from a spatial domain to a frequency domain, thereby further reducing correlation between attribute information of the point cloud. FIG. 21 is an example diagram of an RAHT transform process. As shown in FIG. 21, RAHT is performed on an octree hierarchical structure in a wavelet transform manner, to associate attribute information with the octree nodes. Recursive transform is performed from bottom to top on attribute information of occupied nodes in a same parent node, and nodes in each layer are transformed in three dimensions x, y, and z (referring to FIG. 22) until a root node of the octree is processed. In a hierarchical transform process, direct current (direct current, DC) coefficients (or referred to as low-pass coefficients) obtained by performing transform on nodes at a same layer are transferred to nodes at a previous layer for further transform, and all alternating current (alternating current, AC) coefficients (or referred to as high-pass coefficients) are quantized and encoded.

FIG. 23 is a schematic diagram of RAHT transform and inverse RAHT transform. It is assumed that ${g}_{L , 2 x , y , z}^{′}$ and ${g}_{L , 2 x + 1 , y , z}^{′}$ are two DC coefficients that are neighboring points to each other in a layer L. After RAHT transform, information in the layer L-1 is an AC coefficient ${f}_{L - 1 , x , y , z}^{′}$ and a DC coefficient ${g}_{L - 1 , x , y , z}^{′}$*.* ${f}_{L - 1 , x , y , z}^{′}$ is no longer transformed and is directly quantized and encoded, while for ${g}_{L - 1 , x , y , z}^{′}$, a search for neighboring points continues to be performed for further transform. If no neighboring point is found, *g'*_{*L*-1,*x,y,z*} may be directly transferred to the layer L-2. In other words, the RAHT transform is only effective for a node with a neighboring point, and a node without neighboring points is directly transferred to the previous layer. In the foregoing transform process, weights (weights may be determined based on a quantity of non-empty child nodes in the node) corresponding to ${g}_{L , 2 x , y , z}^{′}$ and ${g}_{L , 2 x + 2 , y , z}^{′}$ are respectively ${w}_{L , 2 x , y , z}^{′}$ and ${w}_{L , 2 x + 1 , y , z}^{′}$ ( ${w}_{0}^{′}$ and ${w}_{1}^{′}$ for short), and a weight of ${g}_{L - 1 , x , y , z}^{′}$ is ${w}_{L - 1 , x , y , z}^{′}$, then a general transform formula for RAHT transform is as follows: $\left[\begin{matrix}{g}_{L - 1 , x , y , z}^{′} \\ {f}_{L - 1 , x , y , z}^{′}\end{matrix}\right] = {T}_{w 0 , w 1} \left[\begin{matrix}{g}_{L , 2 x , y , z}^{′} \\ {g}_{L , 2 x + 1 , y , z}^{′}\end{matrix}\right]$

In the formula (19), *T*_{*w*0*,w*1} is a transform matrix, and the transform matrix may be determined based on a formula (20): ${T}_{w 0 , w 1} = \frac{1}{\sqrt{{w}_{0}^{′} + {w}_{1}^{′}}} \left[\begin{matrix}\sqrt{{w}_{0}^{′}} & \sqrt{{w}_{1}^{′}} \\ - \sqrt{{w}_{1}^{′}} & \sqrt{{w}_{0}^{′}}\end{matrix}\right]$

The transform matrix is adaptively updated as a weight corresponding to each point changes. The foregoing transform process is iteratively updated according to a partitioning structure of an octree until a root node of the octree is processed.

On a basis of RAHT transform, RAHT intra prediction may be performed on attribute information, that is, RAHT intra prediction combined with transform encoding may be performed on the attribute information. The following describes the encoding mode in detail.

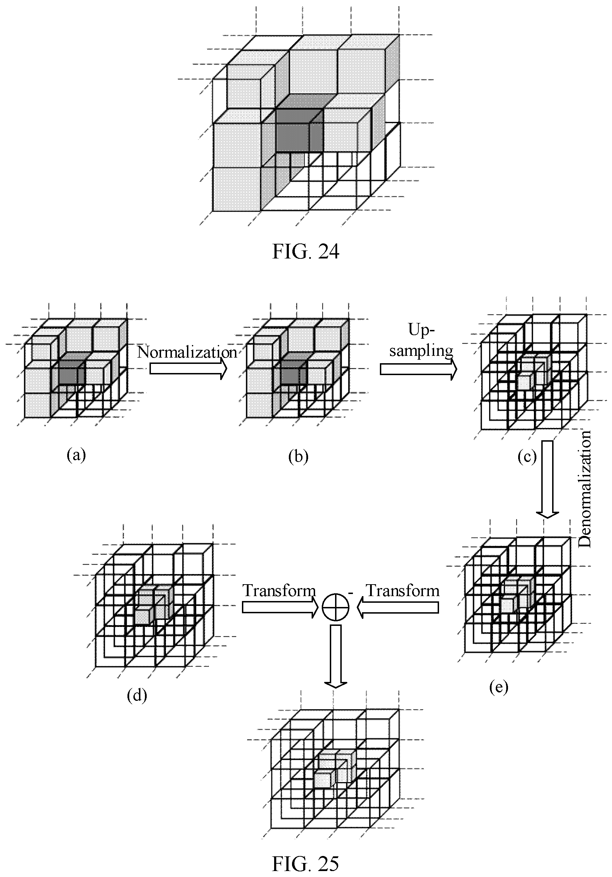

As shown in FIG. 24, based on the hierarchical order of the octree, the RAHT transform is continuously performed from the voxel level until a root node is obtained, thereby completing hierarchical transform encoding of the entire attribute information. In RAHT intra prediction combined with transform encoding, prediction combined with transform encoding may also be performed on the attribute information based on the hierarchical order of the octree. A difference is that, in the process of RAHT intra prediction combined with transform encoding, the transform may be continuously performed from the root node down to the voxel level. During each RAHT transform process, prediction and transform encoding may be performed on the attribute information on a basis of a 2×2×2 block.

For a structure of a coding block of attribute information, reference may be made to FIG. 24. In FIG. 24, the dark gray block is the current block to be encoded, and the light gray blocks are neighboring blocks each sharing a face and neighboring blocks each sharing an edge with the current block. The attribute information of the current block may be normalized according to formulas (21) to (23): ${A}_{node} = {\sum }_{p ∈ node} attribute \left(p\right)$ ${w}_{node} = {\sum }_{p ϵ node} 1 = # \left\{p∈node\right\}$ ${a}_{node} = {A}_{node} / {w}_{node}$

Specifically, attribute information of the current block, namely *A_{node}*, can first be obtained based on attribute information of nodes in the current block. For example, *A_{node}* may be determined by simply summing the attribute information of the nodes in the current block. Then, the attribute information of the current block may be normalized using a quantity (that is, *A_{node}*) of nodes in the current block to obtain an average value *a_{node}* of the attribute information of the current block. Next, transform encoding may be performed using the average value of the attribute information of the current block.

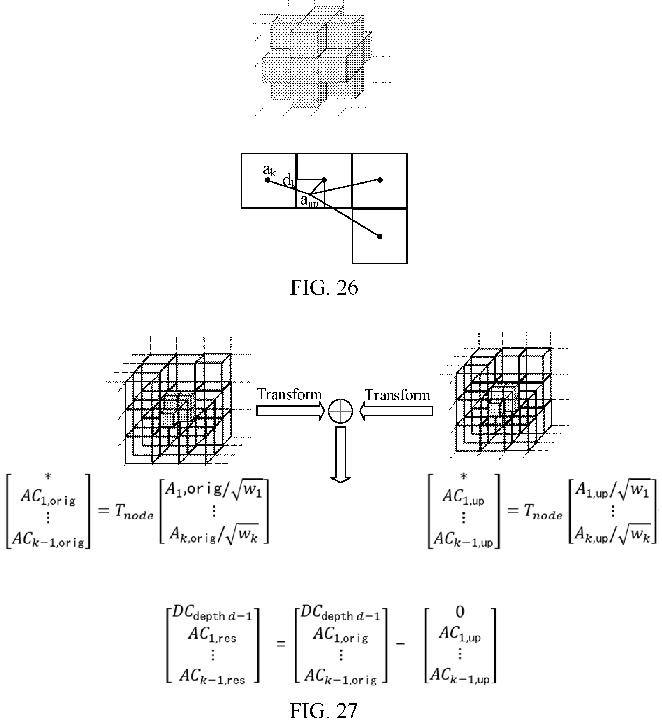

FIG. 25 illustrates an overall process of RAHT intra prediction combined transform encoding of attribute information. In FIG. 25, (d) represents the attribute information of the current block, and (e) in FIG. (25) represents attribute information of a prediction block obtained by performing linear weighted fitting using neighboring attribute information of the current block. Then, attribute transform may be performed on each of the attribute information of the current block and the attribute information of the prediction block to obtain a DC coefficient and an AC coefficient. Thereafter, predictive encoding may be performed on the AC coefficient. The attribute information of the prediction block is obtained by linear fitting performed in the manner shown in FIG. 26.

FIG. 26 is an example diagram of a linear fitting manner for neighboring attribute information of a current block. As shown in FIG. 26, 19 neighboring blocks of the current block may first be determined. Next, linear weighted prediction may be performed on attribute information of each subblock based on a spatial geometric distance between the neighboring blocks and each subblock in the current block, so as to obtain the attribute information of the prediction block. Then, the attribute information of the prediction block may be transformed. For example, the attribute information may be predicted and transformed by using formulas (24) to (26) in FIG. 27 (where the formula (24) represents a transform manner for the attribute information of the current block, the formula (25) represents a transform manner for the attribute information of the prediction block, and the formula (26) outputs predicted residual information: $\left[\begin{matrix}∗ \\ {AC}_{1 , orig} \\ ⋮ \\ {AC}_{k - 1 , orig}\end{matrix}\right] = {T}_{node} \left[\begin{matrix}{A}_{1} , orig / \sqrt{{w}_{1}} \\ ⋮ \\ {A}_{k , orig} / \sqrt{{w}_{k}}\end{matrix}\right]$ $\left[\begin{matrix}∗ \\ {AC}_{1 , up} \\ ⋮ \\ {AC}_{k - 1 , up}\end{matrix}\right] = {T}_{node} \left[\begin{matrix}{A}_{1 , up} / \sqrt{{w}_{1}} \\ ⋮ \\ {A}_{k , up} / \sqrt{{w}_{k}}\end{matrix}\right]$ $\left[\begin{matrix}{DC}_{depth d - 1} \\ {AC}_{1 , res} \\ ⋮ \\ {AC}_{k - 1 , res}\end{matrix}\right] = \left[\begin{matrix}{DC}_{depth d - 1} \\ {AC}_{1 , orig} \\ ⋮ \\ {AC}_{k - 1 , orig}\end{matrix}\right] - \left[\begin{matrix}0 \\ {AC}_{1 , up} \\ ⋮ \\ {AC}_{k - 1 , up}\end{matrix}\right]$

When inter prediction encoding of the attribute information is performed, if the inter prediction encoding is enabled, an RAHT attribute transform encoding structure is first constructed based on geometric information of a current node, that is, node merging is continuously performed at the voxel level until a root node of the entire RAHT transform tree is obtained, thereby obtaining a hierarchical transform encoding structure corresponding to the attribute information. Next, based on the RAHT transform structure, partitioning is performed from the root node to obtain N child nodes of each node (where N is less than or equal to 8). Different from the encoding mode of RAHT intra prediction combined with transform, the encoding mode of RAHT inter prediction combined with transform utilizes node information of a reference frame. For example, RAHT transform may be performed on attribute information of the N child nodes of the current node to obtain DC coefficients and AC coefficients. Further, inter prediction may be performed on the AC coefficients of the N child nodes in a manner as follows.

For example, if an inter prediction node of the current node is valid (that is, there is a node co-located with the current node in the reference frame), attribute information of the prediction node is directly used as a predicted attribute value of the current node.

For another example, if a node having the same position as the current node can be found (that is, there is a node co-located with the current node in the reference frame) for the current node in a buffer of the reference frame, predicted attribute values of the AC coefficients of the N child nodes of the current node may be determined based on AC coefficients of M child nodes included in the co-located node. For example, if an AC coefficient of an inter prediction node corresponding to a child node is not zero, the AC coefficient of the inter prediction node is directly used as a predicted value of the child node. If an AC coefficient of an inter prediction node corresponding to a child node is zero, an AC coefficient of an intra prediction node corresponding to the child node may be used as the predicted value.

For another example, if an inter prediction node of the current node is invalid (that is, there is no node co-located with the current node in the reference frame), a predicted attribute value of an intra-frame neighboring node may be used as a predicted attribute value of the current node.

In addition, after RAHT inter prediction is enabled, an optimal RAHT prediction mode may be selected for each layer. The RAHT prediction mode may be either an RAHT intra prediction mode or an RAHT inter prediction mode. If the cost of the RAHT intra prediction mode is lower than that of the RAHT inter prediction mode, RAHT intra prediction may be performed for the current layer. Otherwise, RAHT inter prediction is performed.

It may be further understood that, for a G-PCC encoding and decoding framework, common test conditions are as follows.
(1) There are four test conditions.
   Condition 1: A geometric position is limited lossy and an attribute is lossy.
   Condition 2: A geometric position is lossless and an attribute is lossy.
   Condition 3: A geometric position is lossless and an attribute is limited lossy.
   Condition 4: A geometric position is lossless and an attribute is lossless.
(2) A common test sequence includes four types: Cat1A, Cat1B, Cat3-fused, and Cat3-frame. A Cat3-frame point cloud includes only reflectance attribute information, a Cat1A or Cat1B point cloud includes only color attribute information, and a Cat3-fused point cloud includes both color attribute information and reflectance attribute information.
(3) There are two types of technologies, which are distinguished by algorithms used for geometric compression.

### Technology 1: octree geometry encoding.

At an encoding end, a bounding box is divided into sub-cubes, and sub-cubes (including points in a point cloud) that are not empty are further divided until leaf nodes obtained through the division are 1×1×1 unit cubes. In a case of lossless geometry encoding, a quantity of points included in each leaf node needs to be encoded, to finally complete octree geometry encoding and generate a binary bitstream.

At a decoding end, parsing is continuously performed in a breadth-first traversal sequence, to obtain an occupancy code of each node, and the nodes are sequentially divided until 1×1×1 unit cubes are obtained. In a case of lossless geometry decoding, parsing needs to be performed to obtain a quantity of points included in each leaf node, to finally restore reconstructed geometric information of a point cloud.

### Technology 2: predictive geometry encoding.

At an encoding end, a prediction tree structure is established in two different modes: KD-tree (a high-latency slow mode) and LiDAR calibration information (a low-latency fast mode). By using the LiDAR calibration information, the points are assigned to different lasers, and a prediction tree structure is established according to the different lasers. Next, based on the prediction tree structure, each node in the prediction tree is traversed, geometric position information of the nodes is predicted by selecting different prediction modes, to obtain prediction residuals, and the geometric prediction residuals are quantized by using a quantization parameter. Finally, with continuous iterations, the prediction residuals of position information of the prediction tree nodes, the prediction tree structure, the quantization parameter, and the like are encoded to generate a binary bitstream.

At a decoding end, bit streams are continuously parsed to reconstruct a prediction tree structure, prediction residual information of a geometric position of each prediction node and a quantization parameter are obtained through the parsing, and the prediction residual is dequantized to obtain reconstructed geometric position information of each node and finally complete geometric reconstruction.

Inter prediction of the attribute information of the point cloud under the G-PCC encoding and decoding framework is described in detail above. In related technologies, whether to enable an inter prediction encoding scheme for attribute information may be determined based on a high-level syntax element (for example, attrInterPredictionEnabled). For example, when predictive encoding is performed on attribute information in each slice (slice, which may also be referred to as a strip), whether inter prediction encoding is enabled for attribute information of a current slice may be adaptively determined at the encoding end based on geometric information, and a syntax element slice_attr_inter_prediction is transferred to the decoding end. Accordingly, at the decoding end, whether an inter prediction decoding scheme of attribute information is enabled for the current slice is determined by parsing the syntax element slice_attr_inter_prediction.

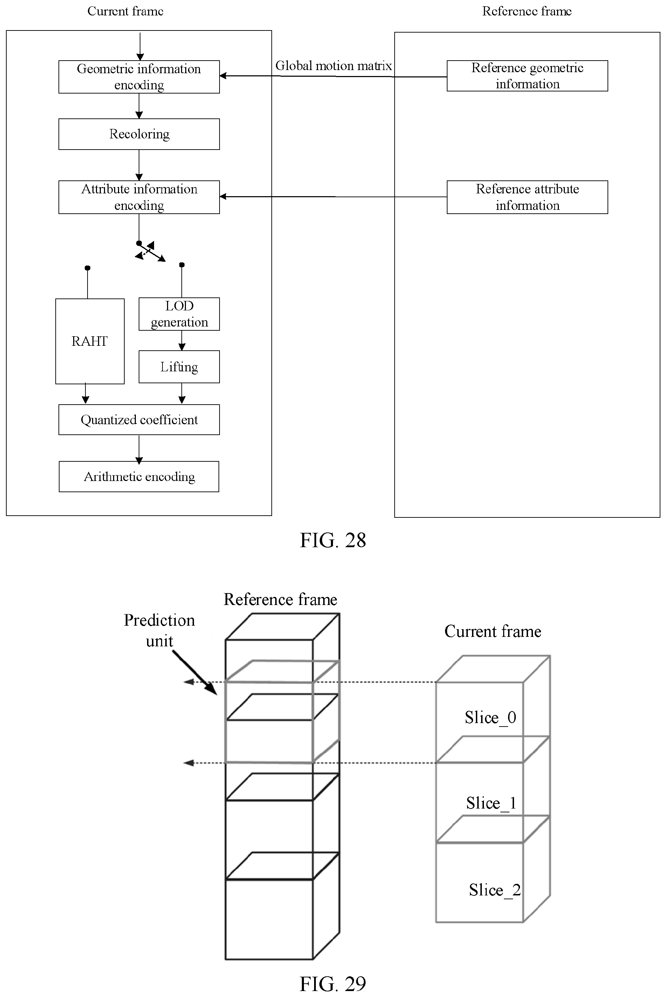

FIG. 28 is a schematic diagram of inter prediction under the G-PCC encoding and decoding framework. As shown in FIG. 28, when inter prediction of attribute information is enabled for a slice, corresponding information of a reference frame (including geometric information and attribute information) is obtained from a prediction buffer. Then, as shown in FIG. 29, a corresponding prediction unit is obtained from the reference frame based on a spatial position of the current slice. With continued reference to FIG. 28, during encoding of geometric information of the current slice, motion compensation is performed on geometric information of the reference frame by using a global motion matrix (for example, at least one of rotation or translation is performed on the geometric information of the reference frame based on the global motion matrix). Then, inter prediction encoding is performed on the current slice by using the geometric information of the reference frame subjected to motion compensation. However, during inter prediction encoding of attribute information of the current slice, after a prediction coding unit is obtained, inter prediction encoding is directly performed on the current slice by using the attribute information of the reference frame. In other words, in the G-PCC encoding and decoding framework, the geometric information and attribute information of the point cloud are encoded and decoded separately. How to improve encoding and decoding efficiency of attribute information is a problem to be solved.

For the foregoing problems, an embodiment of this application provides a point cloud encoding method. The point cloud encoding method includes: performing inter prediction on attribute information of a current frame based on a first prediction mode, to determine a first rate distortion cost, where a reference frame for the first prediction mode is a first reference frame of the current frame that is not subjected to motion compensation; performing inter prediction on the attribute information based on a second prediction mode, to determine a second rate distortion cost, where a reference frame for the second prediction mode is a second reference frame of the current frame that is subjected to motion compensation; and determining a target prediction mode from the first prediction mode and the second prediction mode based on the first rate distortion cost and the second rate distortion cost.

An embodiment of this application further provides a point cloud decoding method. The point cloud decoding method includes: determining an inter prediction mode for attribute information of a current frame, where the inter prediction mode for the attribute information of the current frame includes a first prediction mode and a second prediction mode, a reference frame for the first prediction mode is a first reference frame of the current frame that is not subjected to motion compensation, and a reference frame for the second prediction mode is a second reference frame of the current frame that is subjected to motion compensation; in a case that the inter prediction mode is the second prediction mode, performing inter prediction on the attribute information based on the second reference frame, to determine a predicted value of the attribute information; and determining a reconstructed value of the attribute information based on the predicted value of the attribute information.

In embodiments of this application, an inter prediction scheme based on motion compensation is introduced for inter prediction of attribute information. On this basis, in embodiments of this application, an appropriate inter prediction scheme is selected based on a rate distortion cost obtained using an inter prediction scheme without motion compensation and a rate distortion cost obtained using an inter prediction scheme with motion compensation, which is conducive to improving encoding and decoding efficiency of attribute information of a point cloud.

The following describes in detail a point cloud decoding method according to an embodiment of this application with reference to the accompanying drawings.

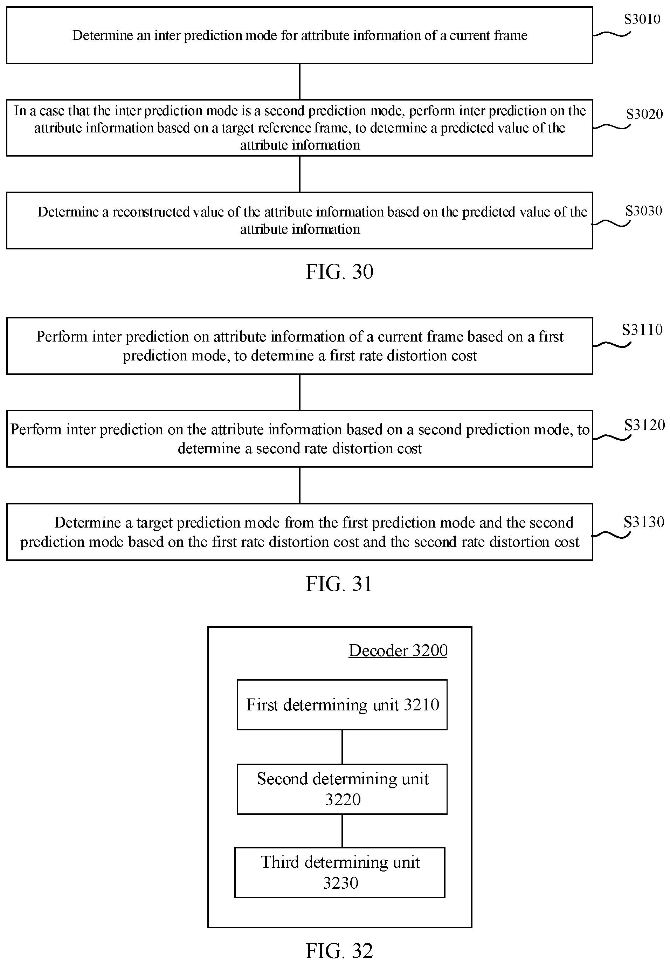

FIG. 30 is a schematic flowchart of the point cloud decoding method according to an embodiment of this application. The decoding method in FIG. 30 may be applied to a decoder. The decoding method in FIG. 30 may be used to decode attribute information of a point cloud. In some implementations, the decoding method may be applied to G-PCC. Alternatively, in some other implementations, the decoding method may be applied to a geometry-based solid content test model (geometry-based solid content test model, GES-TM). GES-TM is an encoding and decoding framework proposed for a dense point cloud (such as a point cloud collected in an augmented reality (augmented reality, AR) scenario or a virtual reality (virtual reality, VR) scenario.

Referring to FIG. 30, in step S3010, an inter prediction mode for attribute information of a current frame is determined. The inter prediction mode above may include a first prediction mode and a second prediction mode. The first prediction mode and the second prediction mode may correspond to different reference frames. A reference frame for the first prediction mode may be a reference frame that is not subjected to motion compensation, and the reference frame may be referred to as a first reference frame. A reference frame for the second prediction mode may be a reference frame that is subjected to motion compensation, and the reference frame may be referred to as a second reference frame.

The attribute information of the current frame is not specifically limited in embodiments of this application. For example, the attribute information may be attribute information of at least one slice in the current frame (such as attribute information of a slice). For another example, if a decoding mode of the current frame is RAHT inter prediction decoding, the attribute information of the current frame may be attribute information of at least one RAHT layer (such as attribute information of an RAHT layer). For another example, if a decoding mode of the current frame is LOD inter prediction decoding, the attribute information of the current frame may be attribute information of at least one LOD layer (such as attribute information of an LOD layer).

In some implementations, the method in FIG. 30 further includes: decoding a bit stream to determine first identification information. The first identification information is used to indicate the inter prediction mode for the attribute information of the current frame.

The first identification information may be carried at any position in the bit stream. For example, the first identification information may be carried in an attribute brick header (attribute brick header, ABH). The first identification information may be slice-level information.

As mentioned above, the attribute information of the current frame may be attribute information of a slice, or attribute information of an RAHT layer or LOD layer. If the attribute information of the current frame is attribute information of a slice, the first identification information may be used to indicate an inter prediction mode for the attribute information of the slice. For example, the first identification information may be used to indicate that an inter prediction mode for attribute information of a slice is the second prediction mode. If the attribute information of the current frame is attribute information of an RAHT layer, the first identification information may be used to indicate an inter prediction mode for the attribute information of the RAHT layer. For example, the first identification information may be used to indicate that an inter prediction mode for attribute information of an RAHT layer is the second prediction mode. If the attribute information of the current frame is attribute information of an LOD layer, the first identification information may be used to indicate an inter prediction mode for the attribute information of the LOD layer. For example, the first identification information may be used to indicate that an inter prediction mode for attribute information of an LOD layer is the second prediction mode.

As mentioned above, the second reference frame is a reference frame obtained by motion compensation. Motion compensation may be performed based on a motion matrix (the motion matrix is hereinafter referred to as a first motion matrix). In other words, motion compensation may be performed on the first reference frame based on the first motion matrix, to obtain the second reference frame. For example, the first reference frame here may be obtained from a prediction buffer when inter prediction of attribute information is enabled. The first motion matrix may be a global motion matrix or a local motion matrix.

The motion compensation described above may be compensation performed on geometric information of a reference frame. There may be a plurality of manners of motion compensation, which are not specifically limited in embodiments of this application. For example, motion compensation may refer to translation of the geometric information of the reference frame. For another example, motion compensation may refer to rotation of the geometric information of the reference frame. For another example, motion compensation may alternatively refer to translation and rotation of the geometric information of the reference frame.

In an example, assuming that the motion matrix is a 4×3 global motion matrix, and geometric information of a point in the current frame is (x, y, z), motion compensation is performed on this point in a rotation manner, and a calculation formula thereof is as follows: $\left[\begin{matrix}x ′ \\ y ′ \\ z ′ \\ v ′\end{matrix}\right] = \left[\begin{matrix}{A}_{0} & {A}_{1} & {A}_{2} \\ {B}_{0} & {B}_{1} & {B}_{2} \\ {C}_{0} & {C}_{1} & {C}_{2} \\ {D}_{0} & {D}_{1} & {D}_{2}\end{matrix}\right] \times \left[\begin{matrix}x \\ y \\ z\end{matrix}\right]$

After the above motion compensation, geometric information of this point is (*x'*, *y'*, *z'*, *v*').

The first motion matrix may be obtained in different manners. In some implementations, a specific first motion matrix may be set for the second prediction mode. The first motion matrix may be determined, for example, based on an error between the attribute information of the current frame and attribute information of a reference frame. Setting a dedicated motion matrix for the inter prediction mode of the attribute information is conducive to improving accuracy of inter prediction of the attribute information. Then, motion compensation is performed on the second reference frame based on the first motion matrix. Alternatively, the first motion matrix may be a motion matrix used for inter prediction of geometric information of the current frame. Using the same motion matrix to perform motion compensation on both the geometric information and the attribute information can reduce a quantity of motion matrices that need to be transferred in a bit stream, thereby improving encoding efficiency. Further, in some implementations, when the first identification information indicates the second prediction mode, the first motion matrix may be obtained by parsing a bit stream.

In embodiments of this application, an inter prediction scheme based on motion compensation is introduced for inter prediction of attribute information. On this basis, in embodiments of this application, an appropriate inter prediction scheme is selected based on a rate distortion cost obtained using an inter prediction scheme without motion compensation and a rate distortion cost obtained using an inter prediction scheme with motion compensation, which is conducive to improving encoding and decoding efficiency of attribute information of a point cloud.

With continued reference to FIG. 30, in step S3020, in a case that the inter prediction mode is the second prediction mode, inter prediction is performed on the attribute information based on the second reference frame, to determine a predicted value of the attribute information.

A correlation between geometric information of the second reference frame subjected to motion compensation and that of the current frame is stronger, such that attribute information of a spatially neighboring point has greater similarity, thereby being conducive to improving accuracy of inter prediction of attribute information. Alternatively, in a case that the first identification information indicates the first prediction mode, inter prediction is performed on the attribute information based on the first reference frame, to determine the predicted value of the attribute information.

In step S3030, a reconstructed value of the attribute information is determined based on the predicted value of the attribute information.

The manner of determining the reconstructed value of the attribute information based on the predicted value of the attribute information may include, for example: parsing a bit stream to determine a residual value of the attribute information; and then determining the reconstructed value of the attribute information based on the predicted value of the attribute information and the residual value of the attribute information.

In some implementations, the manner of determining the residual value of the attribute information may include: parsing a bit stream to determine a quantized coefficient of the attribute information; then, dequantizing the quantized coefficient to determine a transform coefficient of the attribute information; and next, performing inverse transform on the transform coefficient to determine the residual value.

In some implementations, before step S3030 is performed, a reconstructed value of the geometric information of the current frame may be determined. For example, a bit stream is parsed to determine a residual value of the geometric information of the current frame; then, inter prediction is performed on the geometric information to determine a predicted value of the geometric information; and next, a reconstructed value of the geometric information is determined based on the residual value of the geometric information and the predicted value of the geometric information. For another example, prediction information of the geometric information is determined, and then the reconstructed value of the geometric information is determined based on the prediction information.

As mentioned above, the attribute information of the current frame in FIG. 30 may be attribute information of at least one slice in the current frame, or may be attribute information of at least one RAHT layer or LOD layer. For example, if the attribute information of the current frame is attribute information of a slice in the current frame, the first identification information is used to indicate an inter prediction mode for the attribute information of the slice. For another example, if the attribute information of the current frame is attribute information of an RATH layer, the first identification information is used to indicate an inter prediction mode for the attribute information of the RAHT layer. For another example, if the attribute information of the current frame is attribute information of an LOD layer, the first identification information is used to indicate an inter prediction mode for the attribute information of the LOD layer. If different RATH layers (or different LOD layers) may have their respective inter prediction modes, prediction accuracy of the RATH layers (or LOD layers) can be further improved.

For example, the attribute information of the current frame in FIG. 30 is attribute information of at least one slice, and the first identification information is used to indicate an inter prediction mode for attribute information of a slice. In this case, the decoding method in FIG. 30 may further include: decoding a bit stream to determine second identification information. The second identification information may indicate an inter prediction mode for attribute information of at least one RAHT layer (such as attribute information of an RAHT layer).

The second identification information may be carried at any position in the bit stream. For example, the second identification information may be carried in an attribute brick header. The second identification information may be information about an RAHT layer.

The inter prediction mode mentioned herein may include a third prediction mode and a fourth prediction mode. A reference frame for the third prediction mode may be the first reference frame mentioned above, and a reference frame for the fourth prediction mode may be the second reference frame mentioned above.

In an RAHT inter prediction decoding mode, a slice may be divided into a plurality of RAHT layers. If inter prediction may be performed on different RAHT layers based on different reference frames, or in other words, if different prediction modes may be selected for different RAHT layers, an appropriate inter prediction mode may be selected based on a situation of each RAHT layer, so that prediction accuracy of the RATH layers can be further improved, which is conducive to improving encoding and decoding efficiency of the RAHT layers.

For example, the attribute information of the current frame in FIG. 30 is attribute information of at least one slice, and the first identification information is used to indicate an inter prediction mode for attribute information of a slice. In this case, the decoding method in FIG. 30 may further include: decoding a bit stream to determine third identification information. The third identification information may indicate an inter prediction mode for attribute information of at least one LOD layer (such as attribute information of an LOD layer).

The third identification information may be carried at any position in the bit stream. For example, the third identification information may be carried in an attribute brick header. The third identification information may be information about an LOD layer.

The inter prediction mode mentioned herein may include a fifth prediction mode and a sixth prediction mode. A reference frame for the fifth prediction mode may be the first reference frame mentioned above, and a reference frame for the sixth prediction mode may be the second reference frame mentioned above.

In an LOD inter prediction decoding mode, a slice may be divided into a plurality of LOD layers. If inter prediction may be performed on different LOD layers based on different reference frames, or in other words, if different prediction modes may be selected for different LOD layers, an appropriate inter prediction mode may be selected based on a situation of each LOD layer, so that prediction accuracy of the LOD layers can be further improved, which is conducive to improving encoding and decoding efficiency of the LOD layers. The decoding method in FIG. 30 is performed when inter prediction is performed on the attribute information of the current frame. Therefore, in some implementations, the decoding method in FIG. 30 may further include: decoding a bit stream to determine fourth identification information. The fourth identification information is used to indicate whether to enable inter prediction encoding of the attribute information.

As mentioned above, the decoding method illustrated in FIG. 30 may be performed based on a plurality of types of identification information. The following describes in detail a manner of setting these types of identification information.

In some implementations, the first identification information may be represented as enableMotionCompensated (certainly, the first identification information may alternatively be represented by any other letters and/or numbers). For example, if enableMotionCompensated is true, it may indicate that the inter prediction mode for the attribute information of the current frame is the second prediction mode; and if enableMotionCompensated is false, it may indicate that the inter prediction mode for the attribute information of the current frame is the first prediction mode.

In some implementations, the second identification information may be represented as enableMotionCompensatedLayer[lvl] (certainly, the second identification information may alternatively be represented by any other letters and/or numbers). For example, if enableMotionCompensatedLayer [lvl] is true, it may indicate that an inter prediction mode for attribute information of a current RAHT layer is the fourth prediction mode; and if enableMotionCompensatedLayer[lvl] is false, it may indicate that an inter prediction mode for attribute information of a current RAHT layer is the third prediction mode. It should be understood that [lvl] represents a level of the current RAHT layer in an RAHT inter prediction decoding mode.

In some implementations, the third identification information may be represented as enableMotionCompensatedLayer[lvl] (certainly, the third identification information may alternatively be represented by any other letters and/or numbers). For example, if enableMotionCompensatedLayer [lvl] is true, it may indicate that an inter prediction mode for attribute information of a current LOD layer is the sixth prediction mode; and if enableMotionCompensatedLayer[lvl] is false, it may indicate that an inter prediction mode for attribute information of a current LOD layer is the fifth prediction mode. It should be understood that [lvl] represents a level of the current LOD layer in an LOD inter prediction decoding mode. In some implementations, the fourth identification information may be represented as disableAttrInterPred (certainly, the fourth identification information may alternatively be represented by any other letters and/or numbers). The fourth identification information may include a first value (for example, 1 or true) and a second value (for example, 0 or false). If a value of the fourth identification information is the first value, it may indicate that inter prediction encoding of the attribute information may be enabled; and if a value of the fourth identification information is the second value, it may indicate that inter prediction encoding of the attribute information is disabled.

As mentioned above, in a case that the first identification information indicates the second prediction mode, inter prediction is performed on the attribute information based on the second reference frame, to determine the predicted value of the attribute information. Table 2 shows test results in the scheme provided in embodiments of this application.

**Table 2**

| innovizQC1 | TMC13-v24 | Proposal | Coding type |
|---|---|---|---|
| 0 | 14959 | 14959 | I-frame |
| 1 | 15258 | 15172 | P-frame |
| 2 | 15612 | 15535 | P-frame |
| 3 | 15834 | 15760 | P-frame |
| 4 | 15493 | 15363 | P-frame |
| 5 | 15514 | 15383 | P-frame |
| 6 | 15229 | 15140 | P-frame |
| 7 | 15544 | 15418 | P-frame |

In Table 2, innovizQC1 is a sequence for attribute information prediction, TMC13-v24 is a bits per pixel (bits per pixel, BPP) for attribute information encoding in related technologies, Proposal is a BPP for attribute information encoding in the second prediction mode, and Coding type is a type of a frame to be encoded. As can be seen from Table 2, frames to be encoded in the sequence 1 to the sequence 7 are P-frames, and inter prediction encoding of attribute information may be used. In the sequence 1 to the sequence 7, a BPP for attribute information encoding in the second prediction mode is reduced compared with a BPP for attribute information encoding in related technologies, with a reduction ratio of approximately 1%. Therefore, the scheme provided in embodiments of this application may reduce the BPP for attribute information encoding, thereby being conducive to improving encoding efficiency.

The point cloud decoding method provided in embodiments of this application is described in detail above with reference to FIG. 30. A point cloud encoding method according to an embodiment of this application is described in detail below with reference to FIG. 31.

FIG. 31 is a schematic flowchart of a point cloud encoding method according to an embodiment of this application. The encoding method in FIG. 31 may be applied to an encoder. The encoding method in FIG. 31 may be used to encode attribute information of a point cloud. In some implementations, the encoding method may be applied to G-PCC. Alternatively, in some other implementations, the encoding method may be applied to a geometry-based solid content test model (geometry-based solid content test model, GES-TM). GES-TM is an encoding and decoding framework proposed for a dense point cloud (such as a point cloud collected in an augmented reality (augmented reality, AR) scenario or a virtual reality (virtual reality, VR) scenario.

Referring to FIG. 31, in step S3110, inter prediction is performed on attribute information of a current frame based on a first prediction mode, to determine a first rate distortion cost. A reference frame for the first prediction mode may be a reference frame that is not subjected to motion compensation, and the reference frame may be referred to as a first reference frame.

The attribute information of the current frame is not specifically limited in embodiments of this application. For example, the attribute information may be attribute information of at least one slice in the current frame (such as attribute information of a slice). For another example, if an encoding mode of the current frame is RAHT inter prediction encoding, the attribute information of the current frame may be attribute information of at least one RAHT layer (such as attribute information of an RAHT layer). For another example, if an encoding mode of the current frame is LOD inter prediction encoding, the attribute information of the current frame may be attribute information of at least one LOD layer (such as attribute information of an LOD layer).

In step S3120, inter prediction is performed on the attribute information based on a second prediction mode, to determine a second rate distortion cost. A reference frame for the second prediction mode may be a reference frame that is subjected to motion compensation, and the reference frame may be referred to as a second reference frame.

As mentioned above, the second reference frame is a reference frame obtained by motion compensation. Motion compensation may be performed based on a motion matrix (the motion matrix is hereinafter referred to as a first motion matrix). In other words, motion compensation may be performed on the first reference frame based on the first motion matrix, to obtain the second reference frame. For example, the first reference frame here may be obtained from a prediction buffer when inter prediction of attribute information is enabled. The first motion matrix may be a global motion matrix or a local motion matrix.

The motion compensation described above may be compensation performed on geometric information of a reference frame. There may be a plurality of manners of motion compensation, which are not specifically limited in embodiments of this application. For example, motion compensation may refer to translation of the geometric information of the reference frame. For another example, motion compensation may refer to rotation of geometric information of the reference frame. For another example, motion compensation may alternatively refer to translation and rotation of the geometric information of the reference frame.

In an example, assuming that the motion matrix is a 4×3 global motion matrix, and geometric information of a point in the current frame is (x, y, z), motion compensation is performed on this point in a rotation manner, and a calculation formula thereof is as follows: $\left[\begin{matrix}x ′ \\ y ′ \\ z ′ \\ v ′\end{matrix}\right] = \left[\begin{matrix}{A}_{0} & {A}_{1} & {A}_{2} \\ {B}_{0} & {B}_{1} & {B}_{2} \\ {C}_{0} & {C}_{1} & {C}_{2} \\ {D}_{0} & {D}_{1} & {D}_{2}\end{matrix}\right] \times \left[\begin{matrix}x \\ y \\ z\end{matrix}\right]$

After the above motion compensation, geometric information of this point is (*x'*, *y'*, *z'*, *v'*).

The first motion matrix may be obtained in different manners. In some implementations, a specific first motion matrix may be set for the second prediction mode. The first motion matrix may be determined, for example, based on an error between the attribute information of the current frame and attribute information of a reference frame. Setting a dedicated motion matrix for the inter prediction mode of the attribute information is conducive to improving accuracy of inter prediction of the attribute information. Alternatively, the first motion matrix may be a motion matrix used for inter prediction of geometric information of the current frame. Using the same motion matrix to perform motion compensation on both the geometric information and the attribute information can reduce a quantity of motion matrices that need to be transferred in a bit stream, thereby improving encoding efficiency.

The error between the attribute information of the current frame and the attribute information of the reference frame described above may be represented by a mean square error (mean square error, MSE). For example, attribute information of points in the second reference frame and corresponding points in the reference frame may be used as input values of an MSE formula, to calculate a minimum mean square error between the points and the corresponding points; and then, a first motion matrix is determined based on the minimum mean square error.

In step S3130, a target prediction mode is determined from the first prediction mode and the second prediction mode based on the first rate distortion cost and the second rate distortion cost.

A manner of determining the target prediction mode based on the first rate distortion cost and the second rate distortion cost may include, for example: comparing the first rate distortion cost with the second rate distortion cost; and then, using a prediction mode corresponding to the smaller rate distortion cost as the target prediction mode.

For example, if the second rate distortion cost is smaller, the second prediction mode is used as the target prediction mode. A correlation between geometric information of the second reference frame subjected to motion compensation and that of the current frame is stronger, such that attribute information of a spatially neighboring point has greater similarity, thereby being conducive to improving accuracy of inter prediction of attribute information.

Further, in some implementations, if the target prediction mode is the second prediction mode, the first motion matrix may be written into a bit stream; and motion compensation may be performed on the second reference frame based on the first motion matrix at the decoding end.

In embodiments of this application, an inter prediction scheme based on motion compensation is introduced for inter prediction of attribute information. On this basis, in embodiments of this application, an appropriate inter prediction scheme is selected based on a rate distortion cost obtained using an inter prediction scheme without motion compensation and a rate distortion cost obtained using an inter prediction scheme with motion compensation, which is conducive to improving encoding and decoding efficiency of attribute information of a point cloud.

As mentioned above, the target prediction mode may be determined from the first prediction mode and the second prediction mode based on the first rate distortion cost and the second rate distortion cost. If the target prediction mode determined in step S3130 is written into a bit stream, it may facilitate usage by the decoding end. In some implementations, the encoding method in FIG. 31 may further include: writing first identification information into a bit stream. The first identification information described above is used to indicate that the inter prediction mode for the attribute information is the target prediction mode determined in step S3130.

The first identification information may be carried at any position in the bit stream. For example, the first identification information may be carried in an attribute brick header (attribute brick header, ABH). The first identification information may be slice-level information.

As mentioned above, the attribute information of the current frame may be attribute information of a slice, or attribute information of an RAHT layer or LOD layer. If the attribute information of the current frame is attribute information of a slice, the first identification information may be used to indicate an inter prediction mode for the attribute information of the slice. For example, the first identification information may be used to indicate that an inter prediction mode for attribute information of a slice is the second prediction mode. If the attribute information of the current frame is attribute information of an RAHT layer, the first identification information may be used to indicate an inter prediction mode for the attribute information of the RAHT layer. For example, the first identification information may be used to indicate that an inter prediction mode for attribute information of an RAHT layer is the second prediction mode. If the attribute information of the current frame is attribute information of an LOD layer, the first identification information may be used to indicate an inter prediction mode for the attribute information of the LOD layer. For example, the first identification information may be used to indicate that an inter prediction mode for attribute information of an LOD layer is the second prediction mode.

In some implementations, before step S3110 is completed, inter prediction may be performed on geometric information to determine prediction information of the geometric information; and then, residual information of the geometric information may be determined based on the prediction information of the geometric information.

In some implementations, after step S3130 is completed, a predicted value of the attribute information may be determined based on the target prediction mode; and then, a residual value of the attribute information may be determined based on the predicted value of the attribute information. Further, the residual value of the attribute information may be transformed to determine a transform coefficient of the attribute information; then, the transform coefficient is quantified to determine a quantized coefficient of the attribute information; and next, the quantized coefficient is written into a bit stream.

As mentioned above, the attribute information of the current frame in FIG. 31 may be attribute information of at least one slice in the current frame, or may be attribute information of at least one RAHT layer or LOD layer. For example, if the attribute information of the current frame is attribute information of a slice in the current frame, the first identification information is used to indicate an inter prediction mode for the attribute information of the slice. For another example, if the attribute information of the current frame is attribute information of an RATH layer, the first identification information is used to indicate an inter prediction mode for the attribute information of the RAHT layer. For another example, if the attribute information of the current frame is attribute information of an LOD layer, the first identification information is used to indicate an inter prediction mode for the attribute information of the LOD layer. If different RATH layers (or different LOD layers) may have their respective inter prediction modes, prediction accuracy of the RATH layers (or LOD layers) can be further improved.

For example, the attribute information of the current frame in FIG. 31 is attribute information of at least one slice, and the first identification information is used to indicate an inter prediction mode for attribute information of a slice. In this case, the encoding method in FIG. 31 may include: performing inter prediction on attribute information of a current RAHT layer based on a third prediction mode, to determine a third rate distortion cost; then performing inter prediction on the attribute information of the current RAHT layer based on a fourth prediction mode, to determine a fourth rate distortion cost; and next, determining a prediction mode corresponding to the current RAHT layer from the third prediction mode and the fourth prediction mode based on the third rate distortion cost and the fourth rate distortion cost. A reference frame for the third prediction mode is the first reference frame mentioned above, and a reference frame for the fourth prediction mode is the second reference frame mentioned above.

For example, the attribute information of the current frame in FIG. 31 is attribute information of at least one slice, and the first identification information is used to indicate an inter prediction mode for attribute information of a slice. In this case, the encoding method in FIG. 31 may include: performing inter prediction on attribute information of a current LOD layer based on a fifth prediction mode, to determine a fifth rate distortion cost; then performing inter prediction on the attribute information of the current LOD layer based on a sixth prediction mode, to determine a sixth rate distortion cost; and next, determining a prediction mode corresponding to the current LOD layer from the fifth prediction mode and the sixth prediction mode based on the fifth rate distortion cost and the sixth rate distortion cost. A reference frame for the fifth prediction mode is the first reference frame mentioned above, and a reference frame for the sixth prediction mode is the second reference frame mentioned above.

Further, in some implementations, the encoding method in FIG. 31 may further include: writing second identification information into a bit stream. The second identification information is used to indicate a prediction mode corresponding to the at least one RAHT layer.

Further, in some implementations, the encoding method in FIG. 31 may further include: writing third identification information into a bit stream. The third identification information is used to indicate a prediction mode corresponding to the at least one LOD layer.

The second identification information may be carried at any position in the bit stream. For example, the second identification information may be carried in an attribute brick header. The second identification information may be information about an RAHT layer.

The third identification information may be carried at any position in the bit stream. For example, the third identification information may be carried in an attribute brick header. The third identification information may be information about an LOD layer.

The determining the prediction mode corresponding to the current RAHT layer from the third prediction mode and the fourth prediction mode based on the third rate distortion cost and the fourth rate distortion cost may include, for example: comparing the third rate distortion cost with the fourth rate distortion cost; and then, using a prediction mode corresponding to the smaller rate distortion cost as the prediction mode corresponding to the current RAHT layer.

The determining the prediction mode corresponding to the current LOD layer from the fifth prediction mode and the sixth prediction mode based on the fifth rate distortion cost and the sixth rate distortion cost may include, for example: comparing the fifth rate distortion cost with the sixth rate distortion cost; and then, using a prediction mode corresponding to the smaller rate distortion cost as the prediction mode corresponding to the current LOD layer. The encoding method in FIG. 31 is performed when inter prediction is performed on the attribute information of the current frame. Therefore, in some implementations, the encoding method in FIG. 31 may further include: writing fourth identification information into a bit stream. The fourth identification information is used to indicate whether to enable inter prediction encoding of the attribute information.

As mentioned above, a plurality of types of identification information may be written into a bit stream in the encoding method illustrated in FIG. 31. The following describes in detail a manner of setting these types of identification information.

In some implementations, the first identification information may be represented as enableMotionCompensated (certainly, the first identification information may alternatively be represented by any other letters and/or numbers). For example, if enableMotionCompensated is true, it may indicate that the inter prediction mode for the attribute information of the current frame is the second prediction mode; and if enableMotionCompensated is false, it may indicate that the inter prediction mode for the attribute information of the current frame is the first prediction mode.

In some implementations, the second identification information may be represented as enableMotionCompensatedLayer[lvl] (certainly, the second identification information may alternatively be represented by any other letters and/or numbers). For example, if enableMotionCompensatedLayer [lvl] is true, it may indicate that an inter prediction mode for attribute information of a current RAHT layer is the fourth prediction mode; and if enableMotionCompensatedLayer[lvl] is false, it may indicate that an inter prediction mode for attribute information of a current RAHT layer is the third prediction mode. It should be understood that [lvl] represents a level of the current RAHT layer in an RAHT inter prediction decoding mode.

In some implementations, the third identification information may be represented as enableMotionCompensatedLayer[lvl] (certainly, the third identification information may alternatively be represented by any other letters and/or numbers). For example, if enableMotionCompensatedLayer [lvl] is true, it may indicate that an inter prediction mode for attribute information of a current LOD layer is the sixth prediction mode; and if enableMotionCompensatedLayer[lvl] is false, it may indicate that an inter prediction mode for attribute information of a current LOD layer is the fifth prediction mode. It should be understood that [lvl] represents a level of the current LOD layer in an LOD inter prediction decoding mode.

In some implementations, the fourth identification information may be represented as disableAttrInterPred (certainly, the fourth identification information may alternatively be represented by any other letters and/or numbers). The fourth identification information may include a first value (for example, 1 or true) and a second value (for example, 0 or false). If a value of the fourth identification information is the first value, it may indicate that inter prediction encoding of the attribute information may be enabled; and if a value of the fourth identification information is the second value, it may indicate that inter prediction encoding of the attribute information is disabled.

As mentioned above, the target prediction mode or the prediction mode corresponding to the current RAHT layer may be determined based on the rate distortion cost. The rate distortion cost may be determined based on a distortion parameter, a bitrate parameter, and a Lagrangian multiplier in a respective prediction mode. For example, for the first prediction mode, a distortion parameter may be determined based on reconstructed attribute information and original attribute information under the first prediction mode; then, a quantity of bits for encoding required by each first prediction mode may be determined to determine a bitrate parameter; and next, a first rate distortion cost of the first encoding mode may be determined according to the following formula (29): $J = D + λxR$

J represents a rate distortion cost, D represents a distortion parameter, R represents a bitrate parameter, and λ represents the Lagrangian multiplier.

The Lagrangian multiplier may be determined based on a quantization parameter of the attribute information of the current frame. For example, a value of λ may be determined according to the following formula (30): $λ = {2}^{\frac{QP - 4}{6}} \times N$

QP represents the quantization parameter of the attribute information. N may be predefined value. The value of N may be associated with a category of the attribute information. For example, for reflectance and color information, the value of N may vary.

The following describes embodiments of this application in more detail with reference to specific examples. It should be noted that the examples below are merely intended to assist those skilled in the art in understanding the embodiments of this application, but not intended to use specific values or specific scenarios in the examples to limit the embodiments of this application. Apparently, those skilled in the art may make various equivalent modifications or variations based on the examples provided below, and such modifications or variations also fall within the scope of embodiments of this application.

In related technologies, when inter prediction of attribute information is enabled for a slice, corresponding information of a reference frame (including geometric information and attribute information) is obtained from a prediction buffer. Then, as shown in FIG. 29, a corresponding prediction unit is obtained from the reference frame based on a spatial position of the current slice. With continued reference to FIG. 28, during encoding of geometric information of the current slice, motion compensation is performed on geometric information of the reference frame by using a global motion matrix (for example, performing rotation and translation). Then, inter prediction encoding is performed on the current slice by using the geometric information of the reference frame subjected to motion compensation. However, during inter prediction encoding of attribute information of the current slice, after a prediction coding unit is obtained, inter prediction encoding is directly performed on the current slice by using the attribute information of the reference frame. In other words, when inter prediction is performed on attribute information of a point cloud, the attribute information of the point cloud is predicted by using the first reference frame (not subjected to motion compensation) in the prediction buffer. However, in related technologies, whether it is appropriate to use the first reference frame for inter prediction is not considered, which may limit encoding performance of a point cloud to some extent. The following describes in detail the scheme provided in this example from the perspective of each of the encoding end and the decoding end.

The scheme at the encoding end is as follows:
In step 1, geometric inter prediction encoding is performed on a current frame by using geometric information of a reference frame. During inter prediction encoding of geometric information of a current slice, motion compensation is performed on the reference frame by using a global motion matrix, and inter prediction encoding is performed on geometric information of the current frame by using the reference frame subjected to motion compensation.

In step 2, after geometric information encoding is completed, when inter prediction encoding is performed on attribute information of the current slice, a corresponding prediction unit is obtained from the reference frame based on a spatial position of the current slice. A specific manner is as shown in FIG. 29.

In step 3, after the prediction unit is obtained, motion compensation is performed on the geometric information of the reference frame by using a global motion matrix, that is, spatial rotation transform is performed on the geometric information of the reference frame by using the global motion matrix, and a specific calculation manner thereof is as follows: $\left[\begin{matrix}x ′ \\ y ′ \\ z ′ \\ v ′\end{matrix}\right] = \left[\begin{matrix}{A}_{0} & {A}_{1} & {A}_{2} \\ {B}_{0} & {B}_{1} & {B}_{2} \\ {C}_{0} & {C}_{1} & {C}_{2} \\ {D}_{0} & {D}_{1} & {D}_{2}\end{matrix}\right] \times \left[\begin{matrix}x \\ y \\ z\end{matrix}\right]$

In step 4, after global motion compensation is performed on the geometric information of the reference frame, inter prediction encoding is performed on attribute information of the current frame by using the reference frame.

The scheme at the decoding end is as follows:
In step 1, geometric inter prediction decoding is performed on a current frame by using geometric information of a reference frame. During inter prediction decoding of geometric information of a current slice, motion compensation is performed on the reference frame by using a global motion matrix, and inter prediction decoding is performed on geometric information of the current frame by using the reference frame subjected to motion compensation.

In step 2, after geometric information decoding is completed, when inter prediction decoding is performed on attribute information of the current slice, a corresponding prediction unit is obtained from the reference frame based on a spatial position of the current slice. A specific manner is as shown in FIG. 29.

In step 3, after the prediction unit is obtained, motion compensation is performed on the geometric information of the reference frame by using a global motion matrix, that is, spatial rotation transform is performed on the geometric information of the reference frame by using the global motion matrix, and a specific calculation manner thereof is as follows: $\left[\begin{matrix}x ′ \\ y ′ \\ z ′ \\ v ′\end{matrix}\right] = \left[\begin{matrix}{A}_{0} & {A}_{1} & {A}_{2} \\ {B}_{0} & {B}_{1} & {B}_{2} \\ {C}_{0} & {C}_{1} & {C}_{2} \\ {D}_{0} & {D}_{1} & {D}_{2}\end{matrix}\right] \times \left[\begin{matrix}x \\ y \\ z\end{matrix}\right]$

In step 4, after global motion compensation is performed on the geometric information of the reference frame, inter prediction decoding is performed on attribute information of the current frame by using the reference frame.

Syntax elements in the attribute data unit header (Attribute data unit header syntax) are as follows:

| | | |
|---|---|---|
| attribute_data_unit_header() { | Descriptor | Semantics |
| adu_attr_parameter_set_id | u(4) | 7.4.4.2 |
| adu_reserved_zero_3bits | u(3) | 7.4.4.2 |
| adu_sps_attr_idx | ue(v) | 7.4.4.2 |
| adu_slice_id | ue(v) | 7.4.4.2 |
| if(lod_dist_log2_offset_present) | | |
| lod_dist_log2_offset | se(v) | 10.6.2 |
| if(last_comp_pred_enabled && AttrDim == 3) | | |
| for(dpth = 0; dpth ≤ lod_max_levels_minus1; dpth++) | | |
| last_comp_pred_coeff_diff[dpth] | se(v) | 10.6.10.1 |
| if(inter_comp_pred_enabled) | | |
| for(dpth = 0; dpth ≤ lod_max_levels_minus1; dpth++) | | |
| for(*c* = 1; *c* < AttrDim; *c*++) | | |
| inter_comp_pred_coeff_diff[dpth][ *c* ] | se(v) | 10.6.10.1 |
| if(attr_qp_offsets_present) | | |
| for(qc = 0; qc < Min(2, AttrDim); qc++) | | |
| attr_qp_offset[qc] | se(v) | 10.7.1 |
| attr_qp_layers_present | u(1) | 10.7.1 |
| if(attr_qp_layers_present) { | | |
| attr_qp_layer_cnt_minus1 | ue(v) | 10.7.1 |
| for(dpth = 0; dpth ≤ attr_qp_layer_cnt_minus1; dpth++) | | |
| for(qc = 0; qc < Min(2, AttrDim); qc++) | | |
| attr_qp_layer_offset[dpth][qc] | se(v) | 10.7.1 |
| } | | |
| attr_qp_region_cnt | ue(v) | 10.7.1 |
| if(attr_qp_region_cnt) | | |
| attr_qp_region_bits_minus1 | ue(v) | 10.7.1 |
| for(*i* = 0; *i* < attr_qp_region_cnt; *i++*) { | | |
| if(¬attr_coord_conv_enabled) { | | |
| for(*k* = 0; *k* < 3; *k++*) | | |
| attr_qp_region_origin_xyz[*i* ][*k*] | u(v) | 10.7.1 |
| for(*k* = 0; *k* < 3; *k++*) | | |
| attr_qp_region_size_minusl_xyz[*i*][*k*] | u(v) | 10.7.1 |
| } else { | | |
| for( *k* = 0; *k* < 3; *k++)* | | |
| attr_qp_region_origin_rpi[*i*][*k*] | u(v) | 10.7.1 |
| for(k = 0; *k* < 3; *k++)* | | |
| attr_qp_region_size_minus1_rpi[*i*][*k*] | u(v) | 10.7.1 |
| } | | |
| for(ps = 0; ps < Min(2, AttrDim); ps++) | | |
| attr_qp_region_offset[*i*][ps] | se(v) | 10.7.1 |
| } | | |
| disableAttrInterPred | u(1) | |
| If(! disableAttr InterPred) | | |
| motionCompensatedAttrInterPred | u(1) | |
| byte_alignment() | | |
| } | | |

The syntax elements in the fourth-to-last line to the third-to-last line among the syntax elements above are newly introduced in this example on a basis of syntax elements provided in related technologies. It may be seen from the syntax elements that, when inter prediction is performed on attribute information of a point cloud (indicated by disableAttrInterPred), in this example, a target prediction mode is determined from two prediction modes, or in other words, whether to perform inter prediction on the attribute information based on a reference frame subjected to motion compensation is determined (determined based on enableMotionCompensated). Finally, the attribute information of the current slice is reconstructed by using the scheme in this example.

In the scheme in the above example, motion compensation is performed on the reference frame by using the global motion matrix in the geometry encoding scheme, which may make geometric information and attribute information of the reference frame more similar to those of the current frame, thereby improving attitude encoding performance of the current frame. This example may alternatively not rely on a global motion matrix of geometric information. In other words, when geometric information encoding is completed at the encoding end, a global motion matrix between a reference frame and a current frame to be encoded is calculated by using geometric information and to-be-encoded attribute information of the current frame and geometric information and attribute information of the reference frame and by using the MSE of the attribute information as a criterion. This global motion matrix is the global motion matrix of the attribute information. Finally, motion compensation is performed on the geometric information of the reference frame by using the global motion matrix, and the motion matrix vector is transferred to the decoding end. The decoding end reconstructs and restores the attribute information of the current slice by using the motion matrix obtained by parsing.

In some implementations, a rate-distortion optimal algorithm is introduced at the encoding end to adaptively determine whether to enable motion compensation for a current slice. In other words, two prediction encoding modes may be selected: a prediction mode with motion compensation or a prediction mode using geometric information of an original reference frame. An optimal encoding mode is selected by using a Lagrange comprehensive cost multiplier, and the cost is calculated as follows: $J = D + λxR$

J represents a rate distortion cost, D represents a distortion parameter, R represents a bitrate parameter, and λ represents the Lagrangian multiplier.

The Lagrangian multiplier may be determined based on a quantization parameter of attribute information of a node in a current layer. For example, a value of λ may be determined according to the following formula (30): $λ = {2}^{\frac{QP - 4}{6}} \times N$

QP represents the quantization parameter of the attribute information. N may be predefined value. The value of N may be associated with a category of the attribute information. For example, for reflectance and color information, the value of N may vary.

In this example, a global motion matrix vector of the attribute information may be encoded separately, and the global motion matrix vector of the geometric information may also be utilized.

Syntax elements in a corresponding attribute data unit header are as follows:

| | | |
|---|---|---|
| attribute_unit_header() { | Descriptor | Semantics |
| adu_attr_parameter_set_id | u(4) | 7.4.4.2 |
| adu_reserved_zero_3bits | u(3) | 7.4.4.2 |
| adu_sps_attr_idx | ue(v) | 7.4.4.2 |
| adu_slice_id | ue(v) | 7.4.4.2 |
| attr_qp_region_offset[*i*][ps] | se(v) | 10.7.1 |
| ......... | | |
| } | | |
| disableAttrInterPred | u(1) | |
| if(! disableAttrInterPred) | | |
| enableMotionCompensated | u(1) | |
| if(enableMotionCompensated) | | |
| for(int i=0;i<4;++i) | | |
| for(int j=0;j<3;++j) | | |
| gm_matrix[3*i+j] | ue(v) | 7.4.4.2 |
| byte_alignment() | | |
| } | | |

In some implementations, the syntax elements above are parsed at the decoding end, and the syntax elements in the eighth-to-last line to the third-to-last line among the syntax elements above are newly introduced in this example on a basis of syntax elements provided in related technologies. It may be seen from the syntax elements that, when inter prediction is performed on attribute information of a point cloud (indicated by disableAttrInterPred), in this example, a target prediction mode is determined from two prediction modes, or in other words, whether to perform inter prediction on the attribute information based on a reference frame subjected to motion compensation is determined (indicated by enableMotionCompensated). If enableMotionCompensated is true, it indicates that inter prediction is performed on the attribute information based on the reference frame subjected to motion compensation. Then, the global motion matrix vector corresponding to the current slice is parsed, and motion compensation is performed on the reference frame by using the global motion matrix vector. Finally, the attribute information of the current slice is reconstructed by using the scheme in this example.

In some implementations, during RAHT inter prediction encoding of the attribute information at the encoding end, a rate-distortion optimal algorithm is introduced at the encoding end to adaptively determine whether to enable motion compensation for different RAHT layers of a current slice. In other words, two prediction encoding modes may be selected: a prediction mode with motion compensation or a prediction mode using geometric information of an original reference frame. An optimal encoding mode is selected by using a Lagrange comprehensive cost multiplier, and the cost is calculated as follows: $J = D + λxR$

J represents a rate distortion cost, D represents a distortion parameter, R represents a bitrate parameter, and λ represents the Lagrangian multiplier.

The Lagrangian multiplier may be determined based on a quantization parameter of attribute information of a node in a current layer. For example, a value of λ may be determined according to the following formula (30): $λ = {2}^{\frac{QP - 4}{6}} \times N$

QP represents the quantization parameter of the attribute information. N may be predefined value. The value of N may be associated with a category of the attribute information. For example, for reflectance and color information, the value of N may vary.

Finally, an encoding mode enable Motion Compensated Layer [lvl] for different RAHT layers of the current slice is required to be transferred to the decoding end, and when enable Motion Compensated Layer [lvl] is True, it indicates that motion compensation is required to be performed on the information of the reference frame when attribute decoding is performed on attributes of the layer lvl. Otherwise, motion compensation is not performed. The decoding end adaptively selects, based on a mode for each layer, information of a reference frame subjected to motion compensation or information of an original reference frame, to perform attribute inter prediction decoding.

Similarly, a syntax element enableMotionCompensated is required to be added to attribute high-level syntax of each slice to specify whether to perform motion compensation on a reference frame. When enableMotionCompensated is True, it indicates that motion compensation is performed on the reference frame. Otherwise, it indicates that motion compensation is not performed.

At the encoding end, when reference frame compensation is not enabled for each layer of RAHT, enableMotionCompensated is false. Otherwise, it is True.

Syntax elements in a corresponding attribute data unit header are as follows:

| | | |
|---|---|---|
| attribute_data_unit_header() { | Descriptor | Semantic s |
| adu_attr_parameter_set_id | u(4) | 7.4.4.2 |
| adu_reserved_zero_3bits | u(3) | 7.4.4.2 |
| adu_sps_attr_idx | ue(v) | 7.4.4.2 |
| adu_slice_id | ue(v) | 7.4.4.2 |
| attr_qp_region_offset[][ps] | se(v) | 10.7.1 |
| ......... | | |
| } | | |
| disableAttrInterPred | u(1) | |
| if(! disableAttrInterPred) | | |
| enableMotionCompensated | u(1) | |
| if(enableMotionCompensated) | | |
| for(int i=0;i<4;++i) | | |
| for(int j=0;j<3;++j) | | |
| gm_matrix[3*i+j] | ue(v) | 7.4.4.2 |
| if(enableMotionCompensated) | | |
| for(int lvl=0; lvl <num_depth;++ lvl) | | |
| enableMotionCompensatedLayer[lvl] | u(1) | |
| byte_alignment() | | |
| } | | |

In some implementations, the syntax elements above are parsed at the decoding end, and the syntax elements in the eleventh-to-last line to the third-to-last line among the syntax elements above are newly introduced in this example on a basis of syntax elements provided in related technologies. It may be seen from the syntax elements that, when inter prediction is performed on attribute information of a point cloud (indicated by disableAttrInterPred), in this example, a target prediction mode is determined from two prediction modes, or in other words, whether to perform inter prediction on the attribute information based on a reference frame subjected to motion compensation is determined (indicated by enableMotionCompensated). If enableMotionCompensated is true, it indicates that inter prediction is performed on the attribute information based on the reference frame subjected to motion compensation. Then, the global motion matrix vector corresponding to the current slice and a decoding mode of each RAHT layer are parsed (indicated by enableMotionCompensatedLayer[lvl]), and this syntax element specifies whether to perform motion compensation on a reference frame when inter prediction decoding is performed on attribute information of the layer lvl. If enableMotionCompensatedLayer[lvl] is true, motion compensation is required to be performed on the current RAHT layer. Otherwise, motion compensation is not required. Finally, the attribute information of the current slice is reconstructed by using the scheme in this example.

The method embodiments of this application are described above in detail with reference to FIG. 1 to FIG. 31. Apparatus embodiments of this application are described below in detail with reference to FIG. 32 to FIG. 35. It should be understood that the descriptions of the method embodiments correspond to descriptions of the apparatus embodiments, and therefore, for parts that are not described in detail, reference may be made to the foregoing method embodiments.

FIG. 32 is a schematic structural diagram of a decoder according to an embodiment of this application. As shown in FIG. 32, the decoder 3200 may include a first determining unit 3210, a second determining unit 3220, and a third determining unit 3230.

The first determining unit 3210 is configured to parse a bit stream to determine an inter prediction mode for attribute information of a current frame, where the inter prediction mode for the attribute information of the current frame includes a first prediction mode and a second prediction mode, a reference frame for the first prediction mode is a first reference frame of the current frame that is not subjected to motion compensation, and a reference frame for the second prediction mode is a second reference frame of the current frame that is subjected to motion compensation.

The second determining unit 3220 is configured to: in a case that the inter prediction mode is the second prediction mode, perform inter prediction on the attribute information based on the second reference frame, to determine a predicted value of the attribute information.

The third determining unit 3230 is configured to determine a reconstructed value of the attribute information based on the predicted value of the attribute information.

In some implementations, the decoder 3200 further includes: a first parsing unit 3235, configured to parse a bit stream to determine first identification information, where the first identification information is used to indicate the inter prediction mode for the attribute information of the current frame.

In some implementations, the second reference frame is determined based on a first motion matrix, the first motion matrix is different from a second motion matrix, and the second motion matrix is used for performing motion compensation on the first reference frame during decoding of geometric information of the current frame.

In some implementations, the decoder 3200 further includes: a fourth determining unit 3240, configured to: in a case that the first identification information indicates the second prediction mode, parse a bit stream to determine the first motion matrix.

In some implementations, the second reference frame is determined based on a first motion matrix, the first motion matrix and a second motion matrix are the same motion matrix, and the second motion matrix is used for performing motion compensation on the first reference frame during decoding of geometric information of the current frame.

In some implementations, the attribute information is attribute information of at least one slice in the current frame; or the attribute information is attribute information of at least one RAHT layer; or the attribute information is attribute information of at least one level of detail LOD layer.

In some implementations, the attribute information is the attribute information of the at least one slice, and the decoder 3200 further includes: a fifth determining unit 3250, configured to parse a bit stream to determine second identification information, where the second identification information is used to indicate an inter prediction mode for the attribute information of the at least one RAHT layer, the inter prediction mode for the attribute information of the at least one RAHT layer includes a third prediction mode and a fourth prediction mode, a reference frame for the third prediction mode is the first reference frame, and a reference frame for the fourth prediction mode is the second reference frame.

In some implementations, the attribute information is the attribute information of the at least one slice, and the decoder 3200 further includes: a first encoding unit 3255, configured to parse a bit stream to determine third identification information, where the third identification information is used to indicate an inter prediction mode for the attribute information of the at least one LOD layer, the inter prediction mode for the attribute information of the at least one LOD layer includes a fifth prediction mode and a sixth prediction mode, a reference frame for the fifth prediction mode is the first reference frame, and a reference frame for the sixth prediction mode is the second reference frame. In some implementations, the decoder 3200 further includes: a sixth determining unit 3260, configured to parse a bit stream to determine fourth identification information, where the fourth identification information is used to indicate whether to enable inter prediction encoding of the attribute information.

In some implementations, the fourth identification information includes a first value and/or a second value, the first value is used to indicate enabling inter prediction encoding of the attribute information, and the second value is used to indicate disabling inter prediction encoding of the attribute information.

In some implementations, the decoder 3200 further includes: a seventh determining unit 3270, configured to perform motion compensation on the first reference frame based on a first motion matrix, to determine the second reference frame, where the first motion matrix is a global motion matrix or a local motion matrix.

In some implementations, the seventh determining unit 3270 is configured to perform translation and/or rotation on geometric information of the first reference frame based on the first motion matrix.

In some implementations, the decoder 3200 further includes: an eighth determining unit 3280, configured to determine prediction information of the geometric information; and determine a reconstructed value of the geometric information based on the prediction information.

In some implementations, the third determining unit 3230 is configured to determine the reconstructed value of the attribute information based on the predicted value of the attribute information and a residual value of the attribute information.

In some implementations, the decoder 3200 further includes: a ninth determining unit 3290, configured to parse a bit stream to determine a quantized coefficient of the attribute information; perform dequantization on the quantized coefficient to determine a transform coefficient of the attribute information; and perform inverse transform on the transform coefficient to determine the residual value.

In some implementations, the decoding method is applied to GES-TM.

It may be understood that in embodiments of this application, the term "unit" may be a partial circuit, a partial processor, a partial program or software, or the like. Certainly, the term "unit" may be a module or may be in a non-modular form. In addition, components in embodiments may be integrated into one processing unit, or each of the units may exist alone physically, or two or more units may be integrated into one unit. The foregoing integrated unit may be implemented in a form of hardware, or may be implemented in a form of a software functional module.

When the integrated unit is implemented in a form of a software functional module and not sold or used as an independent product, the integrated unit may be stored in a computer-readable storage medium. Based on such an understanding, the technical solutions of embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to execute all or some of the steps of the methods described in the embodiments. The foregoing storage medium includes various media that may store a program code, such as a USB flash drive, a removable hard disk, a read-only memory (read only memory, ROM), a random access memory (random access memory, RAM), a magnetic disk, or an optical disk.

Therefore, an embodiment of this application provides a computer-readable storage medium, applied to a decoder 3200. The computer-readable storage medium stores a computer program, and the computer program, when executed by a processor, causes the decoding method according to any one of the foregoing embodiments to be implemented.

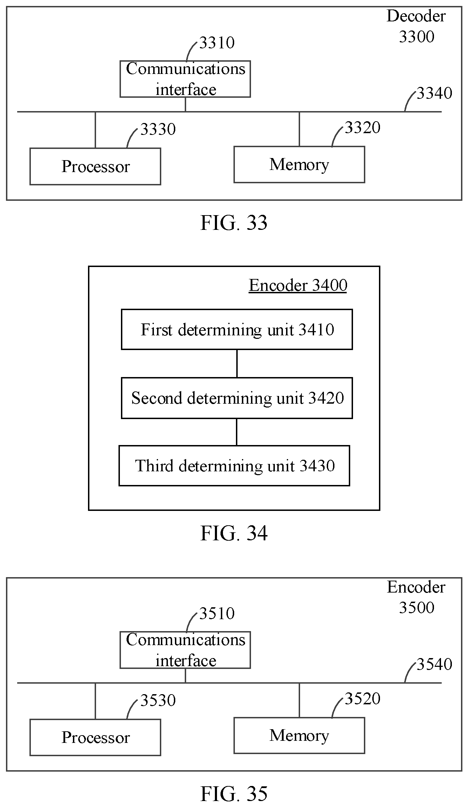

Based on the composition of the decoder 3200 and the computer-readable storage medium, referring to FIG. 33, FIG. 33 is a schematic diagram of a structure of specific hardware of an encoder 3300 according to an embodiment of this application. As shown in FIG. 33, the encoder 3300 may include a communications interface 3310, a memory 3320, and a processor 3330. The components are coupled together through a bus system 3340. It may be understood that the bus system 3340 is configured to implement connection and communication between these components. The bus system 3340 may further include a power bus, a control bus, a status signal bus, and the like in addition to a data bus. However, for clarity of description, various buses are marked as the bus system 3340 in FIG. 33.

The communications interface 3310 is configured to receive and transmit signals in a process of transmitting and receiving information with other external network elements.

The memory 3320 is configured to store a computer program.

The processor 3330 is configured to run the computer program to execute the following operations:
parsing a bit stream to determine an inter prediction mode for attribute information of a current frame, where the inter prediction mode for the attribute information of the current frame includes a first prediction mode and a second prediction mode, a reference frame for the first prediction mode is a first reference frame of the current frame that is not subjected to motion compensation, and a reference frame for the second prediction mode is a second reference frame of the current frame that is subjected to motion compensation; in a case that the inter prediction mode is the second prediction mode, performing inter prediction on the attribute information based on the second reference frame, to determine a predicted value of the attribute information; and determining a reconstructed value of the attribute information based on the predicted value of the attribute information.

It may be understood that the memory 3320 in the embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 3320 in the systems and the methods described in this application includes but is not limited to these memories and any memory of another appropriate type.

However, the processor 3330 may be an integrated circuit chip having a signal processing capability. In an implementation process, steps in the foregoing methods can be implemented by using a hardware integrated logical circuit in the processor 3330, or by using instructions in a form of software. The processor 3330 may be a general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, for example, a random access memory, a flash memory, a read-only memory, a programmable read-only memory, an electrically erasable programmable memory, or a register. The storage medium is located in the memory 3320, and the processor 3330 reads information in the memory 3320 and completes the steps of the foregoing methods in combination with hardware of the processor.

It may be understood that these embodiments described in this application may be implemented by hardware, software, firmware, middleware, microcode, or a combination thereof. For hardware implementation, the processing unit may be implemented in one or more application-specific integrated circuits (application specific integrated circuits, ASIC), digital signal processors (digital signal processing, DSP), digital signal processing devices (DSP Device, DSPD), programmable logic devices (programmable logic device, PLD), field-programmable gate arrays (field-programmable gate array, FPGA), general-purpose processors, controllers, microcontrollers, microprocessors, and other electronic units configured to execute the functions described in this application, or a combination thereof. For software implementation, the technologies described in this application can be implemented by modules (such as processes and functions) that execute the functions described in this application. Software code may be stored in a memory and executed by a processor. The memory can be implemented in the processor or outside the processor.

Optionally, in another embodiment, the processor 3330 is further configured to execute the decoding method in any one of the foregoing embodiments when running the computer program.

FIG. 34 is a schematic structural diagram of an encoder according to an embodiment of this application. As shown in FIG. 34, the encoder 3400 includes a first determining unit 3410, a second determining unit 3420, and a third determining unit 3430.

The first determining unit 3410 is configured to perform inter prediction on attribute information of a current frame based on a first prediction mode, to determine a first rate distortion cost, where a reference frame for the first prediction mode is a first reference frame of the current frame that is not subjected to motion compensation.

The second determining unit 3420 is configured to perform inter prediction on the attribute information based on a second prediction mode, to determine a second rate distortion cost, where a reference frame for the second prediction mode is a second reference frame of the current frame that is subjected to motion compensation.

The third determining unit 3430 is configured to determine a target prediction mode from the first prediction mode and the second prediction mode based on the first rate distortion cost and the second rate distortion cost.

In some implementations, the encoder 3400 further includes a first encoding unit 3435, configured to write first identification information into a bit stream, where the first identification information is used to indicate that an inter prediction mode for the attribute information is the target prediction mode.

In some implementations, the second reference frame is determined based on a first motion matrix, the first motion matrix is different from a second motion matrix, and the second motion matrix is used for performing motion compensation on the first reference frame during encoding of geometric information of the current frame.

In some implementations, the first motion matrix is determined based on an error between the attribute information of the current frame and attribute information of the second reference frame.

In some implementations, the error is a minimum mean square error.

In some implementations, the encoder 3400 further includes a second encoding unit 3440, configured to: in a case that the target prediction mode is the second prediction mode, write the first motion matrix into a bit stream.

In some implementations, the second reference frame is determined based on a first motion matrix, the first motion matrix and a second motion matrix are the same motion matrix, and the second motion matrix is used for performing motion compensation on the first reference frame during encoding of geometric information of the current frame.

In some implementations, the attribute information is attribute information of at least one slice in the current frame; or the attribute information is attribute information of at least one RAHT layer; or the attribute information is attribute information of at least one LOD layer.

In some implementations, the attribute information is the attribute information of the at least one slice, and the encoder 3400 further includes a fourth determining unit 3445, configured to: perform inter prediction on the attribute information of the at least one RAHT layer based on a third prediction mode, to determine a third rate distortion cost, where a reference frame for the third prediction mode is the first reference frame; perform inter prediction on the attribute information of the at least one RAHT layer based on a fourth prediction mode, to determine a fourth rate distortion cost, where a reference frame for the fourth prediction mode is the second reference frame; and determine a prediction mode corresponding to the at least one RAHT layer from the third prediction mode and the fourth prediction mode based on the third rate distortion cost and the fourth rate distortion cost.

In some implementations, the attribute information is the attribute information of the at least one slice, and the encoder 3400 further includes a fifth determining unit 3447, configured to: perform inter prediction on the attribute information of the at least one LOD layer based on a fifth prediction mode, to determine a fifth rate distortion cost, where a reference frame for the fifth prediction mode is the first reference frame; perform inter prediction on the attribute information of the at least one LOD layer based on a sixth prediction mode, to determine a sixth rate distortion cost, where a reference frame for the sixth prediction mode is the second reference frame; and determine a prediction mode corresponding to the at least one LOD layer from the fifth prediction mode and the sixth prediction mode based on the fifth rate distortion cost and the sixth rate distortion cost.

In some implementations, the encoder 3400 further includes a third encoding unit 3450, configured to write second identification information into a bit stream, where the second identification information is used to indicate a prediction mode corresponding to the at least one RAHT layer.

In some implementations, the encoder 3400 further includes a fourth encoding unit 3452, configured to write third identification information into a bit stream, where the third identification information is used to indicate a prediction mode corresponding to the at least one LOD layer.

In some implementations, the encoder 3400 further includes a fifth encoding unit 3455, configured to write fourth identification information into a bit stream, where the fourth identification information is used to indicate whether to enable inter prediction encoding of the attribute information.

In some implementations, the fourth identification information includes a first value and/or a second value, the first value is used to indicate enabling inter prediction encoding of the attribute information, and the second value is used to indicate disabling inter prediction encoding of the attribute information.

In some implementations, the encoder 3400 further includes a sixth determining unit 3460, configured to perform motion compensation on the first reference frame based on a first motion matrix, to determine the second reference frame, where the first motion matrix is a global motion matrix or a local motion matrix.

In some implementations, the sixth determining unit 3460 is configured to perform translation and/or rotation on geometric information of the first reference frame based on the first motion matrix.

In some implementations, the encoder 3400 further includes a sixth encoding unit 3465, configured to perform inter prediction on the geometric information, to determine a predicted value of the geometric information; and determine a residual value of the geometric information based on the predicted value of the geometric information.

In some implementations, the encoder 3400 further includes a seventh encoding unit 3470, configured to determine a predicted value of the attribute information based on the target prediction mode; and determine a residual value of the attribute information based on the predicted value of the attribute information.

In some implementations, the encoder 3400 further includes an eighth encoding unit 3475, configured to perform transform on the residual value of the attribute information to determine a transform coefficient of the attribute information; quantize the transform coefficient to determine a quantized coefficient of the attribute information; and write the quantized coefficient into a bit stream.

In some implementations, the encoding method is applied to GES-TM.

It may be understood that in embodiments of this application, the term "unit" may be a partial circuit, a partial processor, a partial program or software, or the like. Certainly, the term "unit" may be a module or may be in a non-modular form. In addition, components in embodiments may be integrated into one processing unit, or each of the units may exist alone physically, or two or more units may be integrated into one unit. The foregoing integrated unit may be implemented in a form of hardware, or may be implemented in a form of a software functional module.

When the integrated unit is implemented in a form of a software functional module and not sold or used as an independent product, the integrated unit may be stored in a computer-readable storage medium. Based on such an understanding, the technical solutions of embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to execute all or some of the steps of the methods described in the embodiments. The foregoing storage medium includes any medium that can store program code, such as a USB flash drive, a removable hard disk, a ROM, a RAM, a magnetic disk, or an optical disc.

Therefore, an embodiment of this application provides a computer-readable storage medium, applied to an encoder 3400. The computer-readable storage medium stores a computer program, and the computer program, when executed by a processor, causes the decoding method according to any one of the foregoing embodiments to be implemented.

Based on the composition of the encoder 3400 and the computer-readable storage medium, referring to FIG. 35, FIG. 35 is a schematic diagram of a structure of specific hardware of the encoder 3500 according to an embodiment of this application. As shown in FIG. 35, the encoder 3500 may include a communications interface 3510, a memory 3520, and a processor 3530. The components are coupled together through a bus system 3540. It may be understood that the bus system 3540 is configured to implement connection and communication between these components. The bus system 3540 may further include a power bus, a control bus, a status signal bus, and the like in addition to a data bus. However, for clarity of description, various buses are marked as the bus system 3540 in FIG. 35.

The communications interface 3510 is configured to receive and transmit signals in a process of transmitting and receiving information with other external network elements.

The memory 3520 is configured to store a computer program.

The processor 3530 is configured to run the computer program to execute the following operations:

performing inter prediction on attribute information of a current frame based on a first prediction mode, to determine a first rate distortion cost, where a reference frame for the first prediction mode is a first reference frame of the current frame that is not subjected to motion compensation; performing inter prediction on the attribute information based on a second prediction mode, to determine a second rate distortion cost, where a reference frame for the second prediction mode is a second reference frame of the current frame that is subjected to motion compensation; and determining a target prediction mode from the first prediction mode and the second prediction mode based on the first rate distortion cost and the second rate distortion cost.

It may be understood that the memory 3520 in the embodiments of this application may be a volatile memory or a non-volatile memory, or may include a volatile memory and a non-volatile memory. The non-volatile memory may be a ROM, a PROM, an EPROM, an EEPROM, or a flash memory. The volatile memory may be a RAM, which is used as an external cache. By way of example but not limitative description, many forms of RAM are available, such as an SRAM, a DRAM, an SDRAM, a DDR SDRAM, an ESDRAM, an SLDRAM, and a DRRAM. The memory 3520 in the systems and the methods described in this application includes but is not limited to these memories and any memory of another appropriate type.

However, the processor 3530 may be an integrated circuit chip having a signal processing capability. In an implementation process, steps in the foregoing methods can be implemented by using a hardware integrated logical circuit in the processor 3530, or by using instructions in a form of software. The foregoing processor 3530 may be a general-purpose processor, a DSP, an ASIC, an FPGA, or another programmable logic device, discrete gate or transistor logic device, or discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 3520, and the processor 3530 reads information in the memory 3520 and completes the steps of the foregoing methods in combination with hardware of the processor.

It may be understood that these embodiments described in this application may be implemented by hardware, software, firmware, middleware, microcode, or a combination thereof. For hardware implementation, the processing unit may be implemented in one or more ASICs, DSPs, DSPDs, PLDs, FPGAs, general-purpose processors, controllers, microcontrollers, microprocessors, and other electronic units configured to execute the functions described in this application, or a combination thereof. For software implementation, the technologies described in this application can be implemented by modules (such as processes and functions) that execute the functions described in this application. Software code may be stored in a memory and executed by a processor. The memory can be implemented in the processor or outside the processor.

Optionally, in another embodiment, the processor 3530 is further configured to execute the encoding method in any one of the foregoing embodiments when running the computer program.

Embodiments of this application further provide a computer-readable storage medium, where the computer-readable storage medium is a non-transitory computer-readable storage medium storing a bitstream, the bitstream may be generated by using an encoding method of an encoder, or the bitstream may be decoded by using a decoding method of a decoder, where the decoding method may be the decoding method according to any one of the foregoing embodiments, and the encoding method may be the encoding method according to any one of the foregoing embodiments.

It should be noted that in this application, the terminology "include", "comprise" or any other variant is intended to cover non-exclusive inclusion, so that a process, a method, an object or an apparatus that includes a series of elements not only includes those elements, but also includes other elements that are not explicitly listed, or includes inherent elements of the process, method, object or apparatus. In the absence of further restrictions, the element limited by the sentence "including a ..." does not exclude the existence of other identical elements in the process, method, item or device including this element.

The foregoing sequence numbers of embodiments of this application are merely described, and do not represent advantages or disadvantages of the embodiments.

The disclosed methods provided in the several method embodiments of this application may be randomly combined with each other in the case of no conflicts, to obtain new method embodiments.

The disclosed features provided in the several product embodiments of this application may be randomly combined with each other in the case of no conflicts, to obtain new product embodiments.

The disclosed features provided in the several method or device embodiments of this application may be randomly combined with each other in the case of no conflicts, to obtain new method embodiments or device embodiments.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A point cloud decoding method, applied to a decoder, wherein the point cloud decoding method comprises:
determining an inter prediction mode for attribute information of a current frame, wherein the inter prediction mode for the attribute information of the current frame comprises a first prediction mode and a second prediction mode, a reference frame for the first prediction mode is a first reference frame of the current frame that is not subjected to motion compensation, and a reference frame for the second prediction mode is a second reference frame of the current frame that is subjected to motion compensation;
in a case that the inter prediction mode is the second prediction mode, performing inter prediction on the attribute information based on the second reference frame, to determine a predicted value of the attribute information; and
determining a reconstructed value of the attribute information based on the predicted value of the attribute information.

2. The method according to claim 1, wherein the determining the inter prediction mode for the attribute information of the current frame comprises:
parsing a bit stream to determine first identification information, wherein the first identification information is used to indicate the inter prediction mode for the attribute information of the current frame.

3. The method according to claim 2, wherein the second reference frame is determined based on a first motion matrix, the first motion matrix is different from a second motion matrix, and the second motion matrix is used for performing motion compensation on the first reference frame during decoding of geometric information of the current frame.

4. The method according to claim 2, wherein the second reference frame is determined based on a first motion matrix, the first motion matrix and a second motion matrix are the same motion matrix, and the second motion matrix is used for performing motion compensation on the first reference frame during decoding of geometric information of the current frame.

5. The method according to claim 3 or 4, wherein the method further comprises:
in a case that the first identification information indicates the second prediction mode, parsing a bit stream to determine the first motion matrix.

6. The method according to any one of claims 1 to 5, wherein
the attribute information is attribute information of at least one slice in the current frame; or
the attribute information is attribute information of at least one region adaptive hierarchal transform RAHT layer; or
the attribute information is attribute information of at least one level of detail LOD layer.

7. The method according to claim 6, wherein the attribute information is the attribute information of the at least one slice, and the method further comprises:
parsing a bit stream to determine second identification information, wherein the second identification information is used to indicate an inter prediction mode for the attribute information of the at least one RAHT layer, the inter prediction mode for the attribute information of the at least one RAHT layer comprises a third prediction mode and a fourth prediction mode, a reference frame for the third prediction mode is the first reference frame, and a reference frame for the fourth prediction mode is the second reference frame.

8. The method according to claim 6, wherein the attribute information is the attribute information of the at least one slice, and the method further comprises:
parsing a bit stream to determine third identification information, wherein the third identification information is used to indicate an inter prediction mode for the attribute information of the at least one LOD layer, the inter prediction mode for the attribute information of the at least one LOD layer comprises a fifth prediction mode and a sixth prediction mode, a reference frame for the fifth prediction mode is the first reference frame, and a reference frame for the sixth prediction mode is the second reference frame.

9. The method according to any one of claims 1 to 8, wherein the method further comprises:
parsing a bit stream to determine fourth identification information, wherein the fourth identification information is used to indicate whether to enable inter prediction encoding of the attribute information.

10. The method according to claim 9, wherein the fourth identification information comprises a first value and/or a second value, the first value is used to indicate enabling inter prediction encoding of the attribute information, and the second value is used to indicate disabling inter prediction encoding of the attribute information.

11. The method according to any one of claims 1 to 10, wherein the method further comprises:
performing motion compensation on the first reference frame based on a first motion matrix, to determine the second reference frame, wherein the first motion matrix is a global motion matrix or a local motion matrix.

12. The method according to claim 11, wherein the performing motion compensation on the first reference frame based on the first motion matrix comprises:
performing translation and/or rotation on geometric information of the first reference frame based on the first motion matrix.

13. The method according to any one of claims 1 to 12, wherein the method further comprises:
determining prediction information of geometric information of the current frame; and
determining a reconstructed value of the geometric information based on the prediction information.

14. The method according to any one of claims 1 to 13, wherein the determining the reconstructed value of the attribute information based on the predicted value of the attribute information comprises:
determining the reconstructed value of the attribute information based on the predicted value of the attribute information and a residual value of the attribute information.

15. The method according to claim 14, wherein the method comprises:
parsing a bit stream to determine a quantized coefficient of the attribute information;
performing dequantization on the quantized coefficient to determine a transform coefficient of the attribute information; and
perform inverse transform on the transform coefficient to determine the residual value.

16. A point cloud encoding method, applied to an encoder, wherein the point cloud encoding method comprises:
performing inter prediction on attribute information of a current frame based on a first prediction mode, to determine a first rate distortion cost, wherein a reference frame for the first prediction mode is a first reference frame of the current frame that is not subjected to motion compensation;
performing inter prediction on the attribute information based on a second prediction mode, to determine a second rate distortion cost, wherein a reference frame for the second prediction mode is a second reference frame of the current frame that is subjected to motion compensation; and
determining a target prediction mode from the first prediction mode and the second prediction mode based on the first rate distortion cost and the second rate distortion cost.

17. The method according to claim 16, wherein the method further comprises:
writing first identification information into a bit stream, wherein the first identification information is used to indicate that an inter prediction mode for the attribute information is the target prediction mode.

18. The method according to claim 16 or 17, wherein the second reference frame is determined based on a first motion matrix, the first motion matrix is different from a second motion matrix, and the second motion matrix is used for performing motion compensation on the first reference frame during encoding of geometric information of the current frame.

19. The method according to claim 18, wherein the first motion matrix is determined based on an error between the attribute information of the current frame and attribute information of the second reference frame.

20. The method according to claim 19, wherein the error is a minimum mean square error.

21. The method according to claim 16 or 17, wherein the second reference frame is determined based on a first motion matrix, the first motion matrix and a second motion matrix are the same motion matrix, and the second motion matrix is used for performing motion compensation on the first reference frame during encoding of geometric information of the current frame.

22. The method according to any one of claims 18 to 21, wherein the method further comprises:
in a case that the target prediction mode is the second prediction mode, writing the first motion matrix into a bit stream.

23. The method according to any one of claims 16 to 22, wherein
the attribute information is attribute information of at least one slice in the current frame; or
the attribute information is attribute information of at least one RAHT layer; or
the attribute information is attribute information of at least one LOD layer.

24. The method according to claim 23, wherein the attribute information is the attribute information of the at least one slice, and the method further comprises:
performing inter prediction on the attribute information of the at least one RAHT layer based on a third prediction mode, to determine a third rate distortion cost, wherein a reference frame for the third prediction mode is the first reference frame;
performing inter prediction on the attribute information of the at least one RAHT layer based on a fourth prediction mode, to determine a fourth rate distortion cost, wherein a reference frame for the fourth prediction mode is the second reference frame; and
determining a prediction mode corresponding to the at least one RAHT layer from the third prediction mode and the fourth prediction mode based on the third rate distortion cost and the fourth rate distortion cost.

25. The method according to claim 23, wherein the attribute information is the attribute information of the at least one slice, and the method further comprises:
performing inter prediction on the attribute information of the at least one LOD layer based on a fifth prediction mode, to determine a fifth rate distortion cost, wherein a reference frame for the fifth prediction mode is the first reference frame;
performing inter prediction on the attribute information of the at least one LOD layer based on a sixth prediction mode, to determine a sixth rate distortion cost, wherein a reference frame for the sixth prediction mode is the second reference frame; and
determining a prediction mode corresponding to the at least one LOD layer from the fifth prediction mode and the sixth prediction mode based on the fifth rate distortion cost and the sixth rate distortion cost.

26. The method according to claim 24, wherein the method further comprises:
writing second identification information into a bit stream, wherein the second identification information is used to indicate a prediction mode corresponding to the at least one RAHT layer.

27. The method according to claim 25, wherein the method further comprises:
writing third identification information into a bit stream, wherein the third identification information is used to indicate a prediction mode corresponding to the at least one LOD layer.

28. The method according to any one of claims 16 to 27, wherein the method further comprises:
writing fourth identification information into a bit stream, wherein the fourth identification information is used to indicate whether to enable inter prediction encoding of the attribute information.

29. The method according to claim 28, wherein the fourth identification information comprises a first value and/or a second value, the first value is used to indicate enabling inter prediction encoding of the attribute information, and the second value is used to indicate disabling inter prediction encoding of the attribute information.

30. The method according to any one of claims 16 to 29, wherein the method further comprises:
performing motion compensation on the first reference frame based on a first motion matrix, to determine the second reference frame, wherein the first motion matrix is a global motion matrix or a local motion matrix.

31. The method according to claim 30, wherein the performing motion compensation on the first reference frame based on the first motion matrix comprises:
performing translation and/or rotation on geometric information of the first reference frame based on the first motion matrix.

32. The method according to any one of claims 16 to 31, wherein the method further comprises:
performing inter prediction on the geometric information, to determine prediction information of the geometric information; and
predicting the geometric information based on the prediction information.

33. The method according to any one of claims 16 to 32, wherein the method further comprises:
determining a predicted value of the attribute information based on the target prediction mode; and
determining a residual value of the attribute information based on the predicted value of the attribute information.

34. The method according to claim 33, wherein the method comprises:
performing transform on the residual value of the attribute information to determine a transform coefficient of the attribute information; and
quantizing the transform coefficient to determine a quantized coefficient of the attribute information; and
writing the quantized coefficient into a bit stream.

35. A decoder, comprising:
a first determining unit, configured to determine an inter prediction mode for attribute information of a current frame, wherein the inter prediction mode for the attribute information of the current frame comprises a first prediction mode and a second prediction mode, a reference frame for the first prediction mode is a first reference frame of the current frame that is not subjected to motion compensation, and a reference frame for the second prediction mode is a second reference frame of the current frame that is subjected to motion compensation;
a second determining unit, configured to: in a case that the inter prediction mode is the second prediction mode, perform inter prediction on the attribute information based on the second reference frame, to determine a predicted value of the attribute information; and
a third determining unit, configured to determine a reconstructed value of the attribute information based on the predicted value of the attribute information.

36. A decoder, comprising:
a memory, configured to store a computer program; and
a processor, configured to execute the method according to any one of claims 1 to 15 when running the computer program.

37. An encoder, comprising:
a first determining unit, configured to perform inter prediction on attribute information of a current frame based on a first prediction mode, to determine a first rate distortion cost, wherein a reference frame for the first prediction mode is a first reference frame of the current frame that is not subjected to motion compensation;
a second determining unit, configured to perform inter prediction on the attribute information based on a second prediction mode, to determine a second rate distortion cost, wherein a reference frame for the second prediction mode is a second reference frame of the current frame that is subjected to motion compensation; and
a third determining unit, configured to determine a target prediction mode from the first prediction mode and the second prediction mode based on the first rate distortion cost and the second rate distortion cost.

38. An encoder, comprising:
a memory, configured to store a computer program; and
a processor, configured to execute the method according to any one of claims 16 to 34 when running the computer program.

39. A non-volatile computer-readable storage medium storing a bitstream, wherein the bitstream is generated by using an encoding method of an encoder, or the bitstream is decoded by using a decoding method of a decoder, wherein the decoding method is the method according to any one of claims 1 to 15, and the encoding method is the method according to any one of claims 16 to 34.

40. A bitstream, wherein the bitstream comprises a bitstream generated by using the method according to any one of claims 16 to 34.

41. A computer-readable storage medium, wherein the computer-readable storage medium stores a computer program, and the computer program, when executed, causes the method according to any one of claims 1 to 15 or the method according to any one of claims 16 to 34 to be implemented.
